# EUROPEAN PATENT SPECIFICATION

(11) **EP 4 470 141 B1**
(45) Date of publication and mention of the grant of the patent: **23.09.2026**
(21) Application number: 22949825.8
(22) Date of filing: 07.07.2022
(51) Int. Cl.: H04B 7/06, H04L 5/00, H04W 72/115, H04W 72/23

(54) **METHODS AND APPARATUSES OF PUSCH TRANSMISSION**
VERFAHREN UND VORRICHTUNGEN ZUR PUSCH-ÜBERTRAGUNG
PROCÉDÉS ET APPAREILS DE TRANSMISSION PUSCH

(43) Date of publication of application: 04.12.2024
(73) Proprietor: Lenovo (Beijing) Limited, Beijing 100085 (CN)
(72) Inventor: LING, Wei, Beijing 100094 (CN); ZHANG, Yi, Beijing 100094 (CN); ZHU, Chenxi, Beijing 100094 (CN); LIU, Bingchao, Beijing 100094 (CN); XIAO, Lingling, Beijing 100094 (CN)
(74) Representative: Marks & Clerk LLP
(86) International application number: PCT/CN2022/104323
(87) International publication number: WO 2024/007240

(56) References cited:
- WO-A1-2019/244207
- WO-A1-2021/149017
- WO-A1-2022/030984
- WO-A1-2022/082700
- US-A1- 2021 314 931
- ZTE: "Remaining issues on multi-beam enhancements", vol. RAN WG1, no. e-Meeting; 20220221 - 20220303, 14 February 2022 (2022-02-14), XP052109248, Retrieved from the Internet <URL:https://ftp.3gpp.org/tsg_ran/WG1_RL1/TSGR1_108-e/Docs/R1-2201185.zip R1-2201185 Remaining issues on multi-beam enhancements.docx> [retrieved on 20220214]
- VIVO: "Views on unified TCI framework extension for multi-TRP", vol. RAN WG1, no. e-Meeting; 20220509 - 20220520, 29 April 2022 (2022-04-29), XP052153016, Retrieved from the Internet <URL:https://ftp.3gpp.org/tsg_ran/WG1_RL1/TSGR1_109-e/Docs/R1-2203541.zip R1-2203541.docx> [retrieved on 20220429]
- ZTE: "Further details on Multi-beam and Multi-TRP operation", 3GPP TSG RAN WG1 MEETING #104B-E, R1-2102667, 7 April 2021 (2021-04-07), XP052177675
- MODERATOR (SAMSUNG): "Moderator summary for multi-beam enhancement", 3GPP TSG RAN WG1 #103-E, R1-2008147, 3 November 2020 (2020-11-03), XP051950269

## Description

### TECHNICAL FIELD

Embodiments of the present disclosure relate to wireless communication technology, and more particularly, relate to a method and apparatus of physical uplink shared channel (PUSCH) transmission, e.g., configured grant (CG) type 1 PUSCH transmission or the like.

### BACKGROUND OF THE INVENTION

According to the current agreements, whether a CG type 1 PUSCH transmission is transmitted to single transmit-receive point (TRP) or two TRPs is determined by the number of configured power control parameter sets in the corresponding configuration. However, in the common beam framework, power control parameter set(s) is not configured in the corresponding configuration of a CG type 1 PUSCH because it is determined according to the common beam(s) indicated for uplink (UL) transmission. In this case, how to determine which common beam(s) is applicable for a CG type 1 PUSCH transmission and whether the CG type 1 PUSCH transmission is transmitted to a single TRP or multiple TRPs or the like need to be solved.

Therefore, it is desirable to provide a technical solution for multi-transmit-receive point (M-TRP) PUSCH transmission, and more specifically, for M-TRP CG type 1 PUSCH transmission under common beam frame.
"Remaining issues on multi-beam enhancements", R1-2201185, ZTE discloses enhancements on multi-beam operation in Rel-17.
"Views on unified TCI framework extension for multi-TRP", R1-2203541, Vivo discloses views on the issues for unified TCI framework extension for multi-TRP including extension for indication of multiple DL/UL TCI states, simultaneous multi-panel UL transmission, and power control for UL single-DCI.

### SUMMARY

The invention is defined by the appended claims. The present disclosure also describes the following embodiments:
An embodiment of the present disclosure provides a user equipment (UE), which includes: a transceiver; and a processor coupled with the transceiver and configured to: receive configuration information indicating a CG type 1 PUSCH transmission, wherein the configuration information includes at least one of the following to indicate with which common beam(s) of at least one common beam which is applicable for uplink transmission in a slot the CG type 1 PUSCH transmission is associated: first indication information indicating association of the CG type 1 PUSCH transmission with at least a part of at least one common beam or association of the CG type 1 PUSCH transmission with at least a part of a plurality of sounding reference signal (SRS) resource sets configured for CG type 1 PUSCH transmission; second indication information indicating a PUSCH scheme of the CG type 1 PUSCH transmission; or third indication information including at most two SRS resource indicator values; and transmit the CG type 1 PUSCH transmission in the slot based on the configuration information.

In some embodiments, in the case that the configuration information includes at least the first indication information and the third indication information which includes no SRS resource indicator value, and at least two common beams are applicable for uplink transmission in the slot, the CG type 1 PUSCH transmission is associated with one or more common beams of the at least two common beams and one or more SRS resource sets of the plurality SRS resource sets according to the first indication information.

In some embodiments, in the case that the configuration information includes at least the first indication information and the third indication information which includes one SRS resource indicator value, and at least two common beams are applicable for uplink transmission in the slot, the CG type 1 PUSCH transmission is associated with one common beam of the at least two common beams and one SRS resource set of the plurality SRS resource sets according to the first indication information and the third indication information.

In some embodiments, in the case that the configuration information includes at least the first indication information and the third indication information which includes two SRS resource indicator values, and two common beams are applicable for uplink transmission in the slot, the CG type 1 PUSCH transmission is associated with one or more common beams of the two common beams and one or more SRS resource sets of the plurality of SRS resource sets according to the first indication information.

In some embodiments, the first indication information indicates the association of the CG type 1 PUSCH transmission with the at least a part of the plurality of SRS resource sets by indicating one of the following: the CG type 1 PUSCH transmission is associated with a first SRS resource set of the plurality of SRS resource sets, wherein beams of the first SRS resource set and a common beam used for the CG type 1 PUSCH transmission of the at least one common beam are associated with a same TCI state group or a beam of the first SRS resource set is same as a common beam used for the CG type 1 PUSCH transmission of the at least one common beam; the CG type 1 PUSCH transmission is associated with a second SRS resource set of the plurality of SRS resource sets, wherein beams of the second SRS resource set and a common beam used for the CG type 1 PUSCH transmission of the at least one common beam are associated with a same TCI state group, or a beam of the second SRS resource set is same as a common beam used for the CG type 1 PUSCH transmission of the at least one common beam; the CG type 1 PUSCH transmission is associated with at least two SRS resource sets of the plurality of SRS resource sets, wherein a first occasion of the CG type 1 PUSCH transmission is associated with a first SRS resource set, and for each occasion of the CG type 1 PUSCH transmission, beams of a SRS resource set associated with the occasion and a common beam used for the occasion of the at least one common beam are associated with a same TCI state group, or a beam of a SRS resource set associated with the occasion is same as a common beam used for the occasion of the at least one common beam; or the CG type 1 PUSCH transmission is associated with at least two SRS resource sets of the plurality of SRS resource sets, wherein a first occasion of the CG type 1 PUSCH transmission is associated with a second SRS resource set, and for each occasion of the CG type 1 PUSCH transmission, beams of a SRS resource set associated with the occasion and a common beam used for the occasion of the at least one common beam are associated with a same TCI state group or a beam of a SRS resource set associated with the occasion is same as a common beam used for the occasion of the at least one common beam.

In some embodiments, the first indication information indicates the association of the CG type 1 PUSCH transmission with the at least a part of at least one common beam by indicating one of the following: the CG type 1 PUSCH transmission is associated with a first common beam of the at least one common beam, wherein the first common beam and beams of a SRS resource set associated with the CG type 1 PUSCH transmission of the plurality of SRS resource sets are associated with a same TCI state group or a beam of a SRS resource set associated with the CG type 1 PUSCH transmission of the plurality of SRS resource sets is same as the first common beam; the CG type 1 PUSCH transmission is associated with a second common beam of the at least one common beam, wherein the second common beam and beams of a SRS resource set associated with the CG type 1 PUSCH transmission of the plurality of SRS resource sets are associated with a same TCI state group or a beam of a SRS resource set associated with the CG type 1 PUSCH transmission of the plurality of SRS resource sets is same as the second common beam; the CG type 1 PUSCH transmission is associated with at least two common beams, wherein a first occasion of the CG type 1 PUSCH transmission is associated with a first common beam of the at least two common beams, and for each occasion of the CG type 1 PUSCH transmission, beams of a SRS resource set associated with the occasion and a common beam used for the occasion of the at least two common beams are associated with a same TCI state group, or a beam of a SRS resource set associated with the occasion of the plurality of SRS resource sets is same as a common beam used for the occasion of the at least two common beams; or the CG type 1 PUSCH transmission is associated with at least two common beams, wherein a first occasion of the CG type 1 PUSCH transmission is associated with a second common beam of the at least two common beams, and for each occasion of the CG type 1 PUSCH transmission, beams of a SRS resource set associated with the occasion and a common beam used for the occasion of the at least two common beams are associated with a same TCI state group, or a beam of a SRS resource set associated with the occasion of the plurality of SRS resource sets is same as a common beam used for the occasion of the at least two common beams.

In some embodiments, in the case that only one common beam is applicable for uplink transmission in the slot, the CG type 1 PUSCH transmission is associated with the one common beam, and is associated with one SRS resource set of the plurality of SRS resource sets, wherein beams of the SRS resource set and the one common beam are associated with a same TCI state group, or a beam of the SRS resource set of the plurality of SRS resource sets is same as the one common beam.

In some embodiments, the configuration information only includes the second indication information and the third indication information which indicates no SRS resource indicator value, and in the case that there are at least two common beams applicable for uplink transmission in the slot and the second indication information indicates one of the following: the CG type 1 PUSCH transmission is configured with at least two repetitions; the CG type 1 PUSCH transmission is configured with a frequency division multiplexing (FDM) scheme A, a FDM scheme B, or a single frequency network (SFN) scheme; or the CG type 1 PUSCH transmission is indicated with at least two demodulation reference signal (DMRS) ports from two different code-division multiplexing (CDM) groups, the CG type 1 PUSCH transmission is associated with the at least two common beams and at least two SRS resource sets

In some embodiments, in the case that there are at least two common beams applicable for uplink transmission in the slot while the second indication information indicates other PUSCH scheme, the CG type 1 PUSCH transmission is associated with a first beam of the at least two common beams, wherein the first beam and beams of a SRS resource set associated with the CG type 1 PUSCH transmission of the plurality of SRS resource sets are associated with a same TCI state group, or a beam of a SRS resource set associated with the CG type 1 PUSCH transmission of the plurality of SRS resource sets is same as the first beam.

In some embodiments, the configuration information includes the third indication information which includes two SRS resource indicator values and no first indication information, and two common beams are applicable for uplink transmission in the slot, the CG type 1 PUSCH transmission is associated with the two common beams and associated with two SRS resource sets of the plurality of SRS resource sets, wherein for each occasion of the CG type 1 PUSCH transmission, beams of a SRS resource set associated with the occasion and a common beam used for the occasion of the two common beams are associated with the same TCI state group or a beam of a SRS resource set associated with the occasion is same as a common beam used for the occasion of the two common beams.

In some embodiments, the configuration information includes the third indication information which includes one SRS resource indicator value and no first indication information, and one or more common beams are applicable for uplink transmission in the slot, the CG type 1 PUSCH transmission is associated with a first common beam of the one or more common beams, and is associated with one SRS resource set of the plurality of SRS resource sets, wherein beams of the SRS resource set and the first common beam are associated with a same TCI state group or a beam of the SRS resource set of the plurality of SRS resource sets is same as the first common beam.

In some embodiments, the configuration information includes the third indication information which includes no SRS resource indicator value, and at least two common beams are applicable for uplink transmission in the slot, the CG type 1 PUSCH transmission is associated with a first common beam of the at least two common beams and one SRS resource sets of the plurality SRS resource sets, wherein beams of the SRS resource set and the first common beam are associated with a same TCI state group, or a beam of the SRS resource set of the plurality of SRS resource sets is same as the first common beam.

Another embodiment of the present disclosure provides a base station (BS), which includes: a transceiver; and a processor coupled with the transceiver and configured to: transmit configuration information indicating a CG type 1 PUSCH transmission, wherein the configuration information includes at least one of the following to indicate with which common beam(s) of at least one common beam which is applicable for uplink transmission in a slot the CG type 1 PUSCH transmission is associated: first indication information indicating association of the CG type 1 PUSCH transmission with at least a part of at least one common beam or association of the CG type 1 PUSCH transmission with at least a part of a plurality of SRS resource sets configured for CG type 1 PUSCH transmission; second indication information indicating a PUSCH scheme of the CG type 1 PUSCH transmission; or third indication information including at most two SRS resource indicator values; and receive the CG type 1 PUSCH transmission in the slot based on the configuration information.

In some embodiments, in the case that the configuration information includes at least the first indication information and the third indication information which includes no SRS resource indicator value, and at least two common beams are applicable for uplink transmission in the slot, the CG type 1 PUSCH transmission is associated with one or more common beams of the at least two common beams and one or more SRS resource sets of the plurality SRS resource sets according to the first indication information.

In some embodiments, in the case that the configuration information includes at least the first indication information and the third indication information which includes one SRS resource indicator value, and at least two common beams are applicable for uplink transmission in the slot, the CG type 1 PUSCH transmission is associated with one common beam of the at least two common beams and one SRS resource set of the plurality SRS resource sets according to the first indication information and the third indication information.

In some embodiments, in the case that the configuration information includes at least the first indication information and the third indication information which includes two SRS resource indicator values, and two common beams are applicable for uplink transmission in the slot, the CG type 1 PUSCH transmission is associated with one or more common beams of the two common beams and one or more SRS resource sets of the plurality of SRS resource sets according to the first indication information.

In some embodiments, the first indication information indicates the association of the CG type 1 PUSCH transmission with the at least a part of the plurality of SRS resource sets by indicating one of the following: the CG type 1 PUSCH transmission is associated with a first SRS resource set of the plurality of SRS resource sets, wherein beams of the first SRS resource set and a common beam used for the CG type 1 PUSCH transmission of the at least one common beam are associated with a same TCI state group or a beam of the first SRS resource set is same as a common beam used for the CG type 1 PUSCH transmission of the at least one common beam; the CG type 1 PUSCH transmission is associated with a second SRS resource set of the plurality of SRS resource sets, wherein beams of the second SRS resource set and a common beam used for the CG type 1 PUSCH transmission of the at least one common beam are associated with a same TCI state group, or a beam of the second SRS resource set is same as a common beam used for the CG type 1 PUSCH transmission of the at least one common beam; the CG type 1 PUSCH transmission is associated with at least two SRS resource sets of the plurality of SRS resource sets, wherein a first occasion of the CG type 1 PUSCH transmission is associated with a first SRS resource set, and for each occasion of the CG type 1 PUSCH transmission, beams of a SRS resource set associated with the occasion and a common beam used for the occasion of the at least one common beam are associated with a same TCI state group, or a beam of a SRS resource set associated with the occasion is same as a common beam used for the occasion of the at least one common beam; or the CG type 1 PUSCH transmission is associated with at least two SRS resource sets of the plurality of SRS resource sets, wherein a first occasion of the CG type 1 PUSCH transmission is associated with a second SRS resource set, and for each occasion of the CG type 1 PUSCH transmission, beams of a SRS resource set associated with the occasion and a common beam used for the occasion of the at least one common beam are associated with a same TCI state group or a beam of a SRS resource set associated with the occasion is same as a common beam used for the occasion of the at least one common beam.

In some embodiments, the first indication information indicates the association of the CG type 1 PUSCH transmission with the at least a part of at least one common beam by indicating one of the following: the CG type 1 PUSCH transmission is associated with a first common beam of the at least one common beam, wherein the first common beam and beams of a SRS resource set associated with the CG type 1 PUSCH transmission of the plurality of SRS resource sets are associated with a same TCI state group or a beam of a SRS resource set associated with the CG type 1 PUSCH transmission of the plurality of SRS resource sets is same as the first common beam; the CG type 1 PUSCH transmission is associated with a second common beam of the at least one common beam, wherein the second common beam and beams of a SRS resource set associated with the CG type 1 PUSCH transmission of the plurality of SRS resource sets are associated with a same TCI state group or a beam of a SRS resource set associated with the CG type 1 PUSCH transmission of the plurality of SRS resource sets is same as the second common beam; the CG type 1 PUSCH transmission is associated with at least two common beams, wherein a first occasion of the CG type 1 PUSCH transmission is associated with a first common beam of the at least two common beams, and for each occasion of the CG type 1 PUSCH transmission, beams of a SRS resource set associated with the occasion and a common beam used for the occasion of the at least two common beams are associated with a same TCI state group, or a beam of a SRS resource set associated with the occasion of the plurality of SRS resource sets is same as a common beam used for the occasion of the at least two common beams; or the CG type 1 PUSCH transmission is associated with at least two common beams, wherein a first occasion of the CG type 1 PUSCH transmission is associated with a second common beam of the at least two common beams, and for each occasion of the CG type 1 PUSCH transmission, beams of a SRS resource set associated with the occasion and a common beam used for the occasion of the at least two common beams are associated with a same TCI state group, or a beam of a SRS resource set associated with the occasion of the plurality of SRS resource sets is same as a common beam used for the occasion of the at least two common beams.

In some embodiments, in the case that only one common beam is applicable for uplink transmission in the slot, the CG type 1 PUSCH transmission is associated with the one common beam, and is associated with one SRS resource set of the plurality of SRS resource sets, wherein beams of the SRS resource set and the one common beam are associated with a same TCI state group, or a beam of the SRS resource set of the plurality of SRS resource sets is same as the one common beam.

In some embodiments, the configuration information only includes the second indication information and the third indication information which indicates no SRS resource indicator value, and in the case that there are at least two common beams applicable for uplink transmission in the slot and the second indication information indicates one of the following: the CG type 1 PUSCH transmission is configured with at least two repetitions; the CG type 1 PUSCH transmission is configured with a frequency division multiplexing (FDM) scheme A, a FDM scheme B, or a single frequency network (SFN) scheme; or the CG type 1 PUSCH transmission is indicated with at least two demodulation reference signal (DMRS) ports from two different code-division multiplexing (CDM) groups, the CG type 1 PUSCH transmission is associated with the at least two common beams and at least two SRS resource sets

In some embodiments, in the case that there are at least two common beams applicable for uplink transmission in the slot while the second indication information indicates other PUSCH scheme, the CG type 1 PUSCH transmission is associated with a first beam of the at least two common beams, wherein the first beam and beams of a SRS resource set associated with the CG type 1 PUSCH transmission of the plurality of SRS resource sets are associated with a same TCI state group, or a beam of a SRS resource set associated with the CG type 1 PUSCH transmission of the plurality of SRS resource sets is same as the first beam.

In some embodiments, the configuration information includes the third indication information which includes two SRS resource indicator values and no first indication information, and two common beams are applicable for uplink transmission in the slot, the CG type 1 PUSCH transmission is associated with the two common beams and associated with two SRS resource sets of the plurality of SRS resource sets, wherein for each occasion of the CG type 1 PUSCH transmission, beams of a SRS resource set associated with the occasion and a common beam used for the occasion of the two common beams are associated with the same TCI state group or a beam of a SRS resource set associated with the occasion is same as a common beam used for the occasion of the two common beams.

In some embodiments, the configuration information includes the third indication information which includes one SRS resource indicator value and no first indication information, and one or more common beams are applicable for uplink transmission in the slot, the CG type 1 PUSCH transmission is associated with a first common beam of the one or more common beams, and is associated with one SRS resource set of the plurality of SRS resource sets, wherein beams of the SRS resource set and the first common beam are associated with a same TCI state group or a beam of the SRS resource set of the plurality of SRS resource sets is same as the first common beam.

In some embodiments, the configuration information includes the third indication information which includes no SRS resource indicator value, and at least two common beams are applicable for uplink transmission in the slot, the CG type 1 PUSCH transmission is associated with a first common beam of the at least two common beams and one SRS resource sets of the plurality SRS resource sets, wherein beams of the SRS resource set and the first common beam are associated with a same TCI state group, or a beam of the SRS resource set of the plurality of SRS resource sets is same as the first common beam.

Yet another embodiment of the present disclosure provides a method performed by a UE, which includes: receiving configuration information indicating a CG type 1 PUSCH transmission, wherein the configuration information includes at least one of the following to indicate with which common beam(s) of at least one common beam which is applicable for uplink transmission in a slot the CG type 1 PUSCH transmission is associated: first indication information indicating association of the CG type 1 PUSCH transmission with at least a part of at least one common beam or association of the CG type 1 PUSCH transmission with at least a part of a plurality of SRS resource sets configured for CG type 1 PUSCH transmission; second indication information indicating a PUSCH scheme of the CG type 1 PUSCH transmission; or third indication information including at most two SRS resource indicator values; and transmitting the CG type 1 PUSCH transmission in the slot based on the configuration information.

Yet another embodiment of the present disclosure provides a method performed by a method performed by a BS, which includes: transmitting configuration information indicating a CG type 1 PUSCH transmission, wherein the configuration information includes at least one of the following to indicate with which common beam(s) of at least one common beam which is applicable for uplink transmission in a slot the CG type 1 PUSCH transmission is associated: first indication information indicating association of the CG type 1 PUSCH transmission with at least a part of at least one common beam or association of the CG type 1 PUSCH transmission with at least a part of a plurality of SRS resource sets configured for CG type 1 PUSCH transmission; second indication information indicating a PUSCH scheme of the CG type 1 PUSCH transmission; or third indication information including at most two SRS resource indicator values; and receiving the CG type 1 PUSCH transmission in the slot based on the configuration information.

### BRIEF DESCRIPTION OF THE DRAWINGS

In order to describe the manner in which advantages and features of the application can be obtained, a description of the application is rendered by reference to specific embodiments thereof, which are illustrated in the appended drawings. These drawings depict only example embodiments of the application and are not therefore to be considered limiting of its scope.
Fig. 1 illustrates a schematic diagram of a wireless communication system according to some embodiments of the present disclosure.
Fig. 2 illustrates a method performed by a BS of CG type 1 PUSCH transmission according to some embodiments of the present disclosure.
Fig. 3 illustrates a method performed by a UE of CG type 1 PUSCH transmission according to some embodiments of the present disclosure.
Fig. 4 illustrates a simplified block diagram of an exemplary apparatus of CG type 1 PUSCH transmission according to some embodiments of the present disclosure.

### DETAILED DESCRIPTION

The detailed description of the appended drawings is intended as a description of the currently preferred embodiments of the present invention, and is not intended to represent the only form in which the present invention may be practiced. It should be understood that the same or equivalent functions may be accomplished by different embodiments that are intended to be encompassed within the spirit and scope of the present invention.

While operations are depicted in the drawings in a particular order, persons skilled in the art will readily recognize that such operations need not be performed in the particular order as shown or in a sequential order, or that all illustrated operations need be performed, to achieve desirable results; sometimes one or more operations can be skipped. Further, the drawings can schematically depict one or more example processes in the form of a flow diagram. However, other operations that are not depicted can be incorporated in the example processes that are schematically illustrated. For example, one or more additional operations can be performed before, after, simultaneously, or between any of the illustrated operations. In certain circumstances, multitasking and parallel processing can be advantageous.

Reference will now be made in detail to some embodiments of the present disclosure, examples of which are illustrated in the accompanying drawings. To facilitate understanding, embodiments are provided under specific network architecture and new service scenarios, such as the 3^{rd} generation partnership project (3GPP) 3G, LTE, LTE-Advanced (LTE-A), 3GPP 4G, 3GPP 5G NR, 3GPP Release 16 and onwards, etc. It is contemplated that along with the developments of network architectures and new service scenarios, all embodiments in the present disclosure are also applicable to similar technical problems; and moreover, the terminologies recited in the present disclosure may change, which should not affect the principle of the present disclosure.

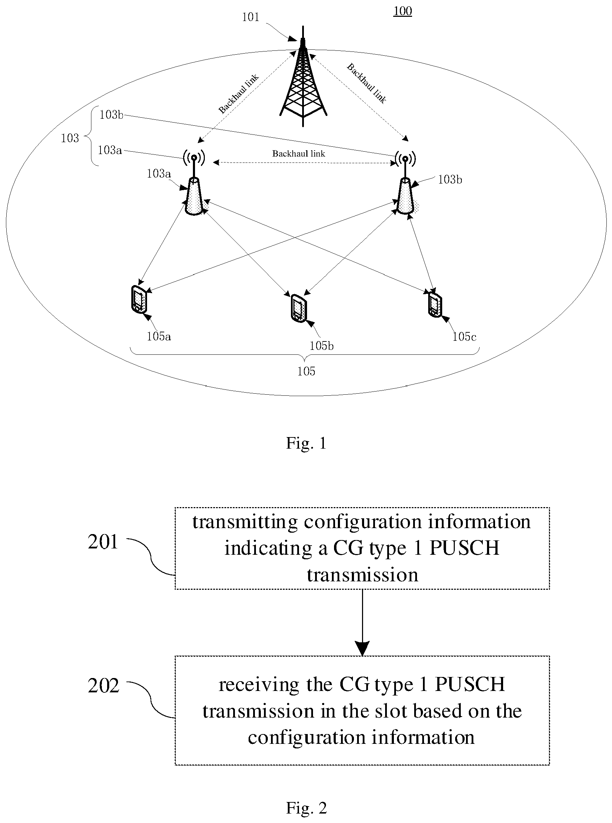

Fig. 1 is a schematic diagram illustrating an exemplary wireless communication system 100 according to some embodiments of the present disclosure.

Referring to Fig. 1, the wireless communication system 100 can include a BS 101, TRPs 103 (e.g., TRP 103a and TRP 103b), and UEs 105 (e.g., UE 105a, UE 105b, and UE 105c). Although only one BS 101, two TRPs 103 and three UEs 105 are shown for simplicity, it should be noted that the wireless communication system 100 may include more or less communication device(s), apparatus, or node(s) in accordance with some other embodiments of the present application.

The UE(s) 105 may include computing devices, such as desktop computers, laptop computers, personal digital assistants (PDAs), tablet computers, smart televisions (e.g., televisions connected to the Internet), set-top boxes, game consoles, security systems (including security cameras), vehicle on-board computers, network devices (e.g., routers, switches, and modems), or the like. According to some embodiments of the present disclosure, the UE(s) 105 may include a portable wireless communication device, a smart phone, a cellular telephone, a flip phone, a device having a subscriber identity module, a personal computer, a selective call receiver, or any other device that is capable of sending and receiving communication signals on a wireless network. In some embodiments of the present disclosure, the UE(s) 101 includes wearable devices, such as smart watches, fitness bands, optical head-mounted displays, or the like. Moreover, the UE(s) 105 may be referred to as a subscriber unit, a mobile, a mobile station, a user, a terminal, a mobile terminal, a wireless terminal, a fixed terminal, a subscriber station, a user terminal, or a device, or described using other terminology used in the art. The UE(s) 101 may communicate with the BS 102 via uplink (UL) communication signals.

In some embodiments of the present application, the BS 101 may be referred to as an access point, an access terminal, a base, a base unit, a macro cell, a Node-B, an evolved Node B (eNB), a gNB, an ng-eNB, a Home Node-B, a relay node, or a device, or described using other terminology used in the art. The UEs 105 (for example, the UE 105a, the UE 105b, and the UE 105c) may include, for example, but is not limited to, a computing device, a wearable device, a mobile device, an internet of things (IoT) device, a vehicle, etc.

The TRPs 103, for example, the TRP 103a and the TRP 103b, can communicate with the BS 101 via, for example, a backhaul link. Each of TRPs 103 can serve some or all of the UEs 105. As shown in Fig. 1, the TRP 103a can serve some mobile stations (which include the UE 105a, the UE 105b, and the UE 105c) within a serving area or region (e.g., a cell or a cell sector). The TRP 103b can serve some mobile stations (which include the UE 105a, the UE 105b, and the UE 105c) within a serving area or region (e.g., a cell or a cell sector). In some other embodiments, the TRP 103a and the TRP 103b can serve different UEs. The TRP 103a and the TRP 103b can communicate with each other via, for example, a backhaul link.

Regarding the PUSCH transmission, and specifically, the CG type 1 PUSCH transmission, there are some agreements related to multi-transmit-receive point (M-TRP) CG type 1 PUSCH in R17 which are shown as follows:
- For type 1 CG based m-TRP PUSCH repetition, introduce the second fields of *'pathlossReferenceIndex', 'srs-ResourceIndicator'* and *'precodingAndNumberOfLayers'* in *'rrc-ConfiguredUplinkGrant'.*
- When DCI schedules a retransmission of CG-PUSCH for type 1 CG-PUSCH or type 2 CG-PUSCH (DCI with CRC scrambled with CS-RNTI and NDI=1) while the CG configuration is RRC-configured with two fields of power control parameters, apply the same procedure as DCI activation for CG type 2 agreed before, i.e.,
   - The first (legacy) RRC-configured fields *'p0-PUSCH-Alpha'* and *'powerControlLoopToUse'* are associated with the first SRS resource set.
   - The second (new) RRC-configured fields *'p0-PUSCH-Alpha'* and *'powerControlLoopToUse'* are associated with the second SRS resource set.
   - Applying the first, second, or both first and second RRC-configured fields *'p0-PUSCH-Alpha'* and *'powerControlLoopToUse'* is determined from the new DCI field (for dynamic switching) of the activating DCI similar to the case of DG-PUSCH.
- When fallback DCI (DCI format 0_0) activates a type 2 CG or schedules a retransmission of a type 1 or type 2 CG, and the CG configuration is RRC-configured with 2 sets of power control parameters (two *'p0-PUSCH-Alpha' and 'powerControlLoopToUse*')*:*
   - The UE uses the first set of values for power control (first RRC-configured *'p0-PUSCH-Alpha' and 'powerControlLoopToUse*')*.*
- When a DCI that includes the new 2-bits DCI field for dynamic switching activates a type 2 CG or schedules a retransmission of a type 1 or type 2 CG, and the CG configuration is RRC-configured with only one set of power control parameters (one *'p0-PUSCH-Alpha'* and *'powerControlLoopToUse*')*:*
   - The UE expects the new DCI field for dynamic switching is set to "00", and all PUSCH repetitions are associated with the first SRS resource set.
- For a BWP configured with two SRS resource sets for CB or NCB based mTRP PUSCH repetition with Type 1 CG configuration,
   - If the CG is configured with only one field for each of *'pathlossReferenceIndex', 'srs-Resourcelndicator', 'precodingAndNumberOfLayers', 'p0-PUSCH-Alpha'* and *'powerControlLoopToUse',* PUSCH repetitions are associated with the first SRS resource set.

For M-TRP type 1 CG PUSCH, when two fields of *'precodingAndNumberOfLayers'* and/or *'srs-Resourcelndicator'* are present in *'rrc-ConfiguredUplinkGrant',*
- the indicated two precoding information (for CB PUSCH) are separately determined using two fields of *'precodingAndNumberOfLayers'.*
- the indicated SRIs (for CB/NCB PUSCH) are separately determined using two fields of *'srs-ResourceIndicator'.*

- For mTRP type 1 CG PUSCH, when both *srs-ResourceSetToAddModList* and *srs-ResourceSetToAddModListDCI-0-2* are configured with two SRS resource sets, the two SRS resource sets configured by *srs-ResourceSetToAddModList* is used to determine the SRS resource indications by two *srs-ResourceIndicator* fields of mTRP CG PUSCH.
- For type 1 CG based multi-TRP PUSCH repetition:
   - The first (legacy) RRC-configured fields *'p0-PUSCH-Alpha'* and *'powerControlLoopToUse'* are associated with the first SRS resource set.
   - The second (new) RRC-configured fields *'p0-PUSCH-Alpha'* and *'powerControlLoopToUse'* are associated with the second SRS resource set.
- For M-TRP CG type 1 PUSCH,
   - If two SRS resource sets with usage set to 'codebook' or 'noncodebook' are configured in srs-ResourceSetToAddModList, the two SRS resource sets are used to determine the SRS resource indications by *srs-ResourceIndicator* and *srs-ResourceIndicator2,*
   - otherwise, the two SRS resource sets with usage set to 'codebook' or 'noncodebook' configured in *srs-ResourceSetToAddModListDCI-0-2* are used to determine the SRS resource indications by *srs-ResourceIndicator* and *srs-ResourceIndicator2.*

For dynamic grant DG PUSCH or CG type 2 PUSCH, there is a SRS resource set indicator (SRI) field in the corresponding DCI to indicate that the PUSCH is S-TRP PUSCH or M-TRP PUSCH. According to the above agreements, whether the CG type 1 PUSCH is transmitted to a single TRP or two TRPs is determined by the number of configured power control parameter sets in the corresponding configuration, because the SRS resource indicator (i.e. *srs-ResourceIndicator* or *srs-ResourceIndicator2*) will be absent if only one SRS resource is configured in each SRS resource set.

However, there is no SRS resource set indicator field in the CG PUSCH configuration, and a CG type 1 PUSCH transmission is configured to be S-TRP or M-TRP according to the number of SRS resource indicator (i.e. *srs-ResourceIndicator*) and the number of power control parameter sets (e.g. *p0-PUSCH-Alpha, pathlossReferenceIndex* and *powerControlLoopToUse*) configured in the configured grant PUSCH configuration.

In common beam framework, the power control parameter set of a CG type 1 PUSCH is not configured in the CG PUSCH configuration, but is determined according to the common beam(s) indicated for UL transmission (e.g. PUSCH and PUCCH transmission).

However, there is a possibility that there is no *srs-ResourceIndicator* in a CG PUSCH configuration considering that only one SRS resource is configured in any SRS resource set configured with usage 'codebook' or 'non-codebook'. In this case, when two common beams are indicated for UL transmission, whether the CG type 1 PUSCH transmission is to be transmitted by one common beam (i.e. S-TRP PUSCH) or two common beams (i.e. M-TRP PUSCH) is not clear.

Therefore, how to determine a PUSCH transmission, e.g., CG type 1 or the like is transmitted to single TRP or multiple TRPs needs to be solved especially in the case that there is no SRS resource indicator (i.e. *srs-ResourceIndicator*) in the corresponding configuration. Embodiments of the present disclosure propose a technical solution to solve such technical problems, especially for CG type 1 PUSCH transmission or the like (e.g., a PUSCH only configured by RRC signalling).

A plurality of SRS resource sets with usage set to 'codebook' or 'non-codebook' in the list, such as: *srs-ResourceSetToAddModList* or *srs-ResourceSetToAddModListDCI-0-2,* may be configured for M-TRP PUSCH transmission. The UE supports simultaneous transmission with multiple panels (i.e. STxMP), and a plurality of SRS resource sets with usage set to 'codebook' or 'non-codebook' in *srs-ResourceSetToAddModList* or *srs-ResourceSetToAddModListDCI-0-2* may also be configured for STxMP PUSCH transmission, where the PUSCH transmission can be transmitted to one TRP of a plurality of TRPs or multiple TRPs of the plurality of TRPs.

In the present disclosure, two SRS resource sets with usage set to 'codebook' or 'non-codebook' may be configured for PUSCH transmission, the first SRS resource set of the two SRS resource sets may be the SRS resource set with a lower index (or lower identity) and the second SRS resource set of the second SRS resource sets may be the SRS resource set with a higher index (or lower identity). For example, the first SRS resource set may have an index "0," the second SRS resource set may have an index "1." In some other cases, more than two, for example, three SRS resource sets may be configured for codebook or non-codebook based PUSCH transmission. The first SRS resource set of the three SRS resource sets may have with the lowest index, the second SRS resource set of the three SRS resource sets may have an index higher than that of the first SRS resource set, and the third SRS resource set may have the highest index. For other numbers of SRS resource sets, they may be indexed in a similar fashion.

In R17, M-TRP PUSCH transmission is based on the legacy beam indication (i.e. spatial relation information), and the beam of PUSCH transmission is the same as the beam of indicated SRS resource of the associated SRS resource set. In the common beam framework, the beam of PUSCH transmission is indicated by a downlink control information (DCI) format 1_1 or DCI format 1_2 with a medium access control control element (MAC CE) activating multiple transmission configuration indication (TCI) codepoints or a MAC CE activating only one TCI codepoint which is not related to the beam of the associated SRS resource. Besides, each SRS resource set is configured by radio resource control (RRC) to follow the common beam indicated for uplink UL transmission. In R18, M-TRP PUSCH transmission will be supported based on the common beam framework.

In the case that the two SRS resource sets configured for PUSCH transmission are configured to follow the indicated common beam(s), then beams of associated SRS resource set(s) of a PUSCH transmission and the beam(s) of the PUSCH transmission are the same where the PUSCH and the associated SRS resource set of the PUSCH are transmitted to the same TRP.

In the case that the two SRS resource sets configured for PUSCH transmission are not configured to follow the indicated common beam(s), the PUSCH transmission and the associated SRS resource set of the PUSCH transmission should also be transmitted to the same TRP. Each SRS resource of each SRS resource set will be configured by RRC with a beam or activated by MAC CE with a beam if the two SRS resource sets are not configured to follow the indicated common beam. The beams of all SRS resources in one SRS resource set will be associated with the same TRP considering that they share the same power control parameter set. In order to make sure a PUSCH transmission and its associated SRS resource set(s) are transmitted to the same TRP, an association will be built between beams and TRPs.

In this disclosure, a TCI state group or a TCI state pool (Hereinafter "TCI state group," "TCI state pool" may be used interchangeably where appropriate) may be used to identify a TRP. Therefore, two TCI state groups may be configured to identify two TRPs. Each beam is associated with one TCI state group by RRC signalling or MAC CE indication. Therefore, if a PUSCH transmission is associated with a beam associated with a TCI state group, then the beams of the associated SRS resource set of the PUSCH transmission is associated with the TCI state group too. At the BS side, it may configure or activate beams for a SRS resource set of the two SRS resource sets configured for PUSCH transmission to be associated with one TCI state group of two TCI state groups and configure or activate beams for the other SRS resource set of the two SRS resource sets configured for PUSCH transmission to be associated with the other TCI state group of the two TCI state groups. In the present disclosure, a beam may refer to a joint or UL TCI state.

Hereinafter, in the present disclosure, if a PUSCH transmission, e.g., CG type 1 PUSCH transmission or the like is configured to be associated with two common beams, a PUSCH transmission repetition (which may be TDMed, FDMed, or SFNed) of the PUSCH transmission, a layer subset (e.g. SDM) of the PUSCH transmission or a frequency part (e.g. FDMed) of the PUSCH transmission associated with one common beam is referred to as a PUSCH transmission occasion. According to the above, a PUSCH transmission occasion associated with a common beam is also associated with the same SRS resource set of two SRS resource sets.

Therefore, the common beam of a PUSCH transmission occasion of a PUSCH is always be associated with the same TCI state group where the beams of the associated SRS resource set of the PUSCH transmission occasion are associated regardless of whether two SRS resource sets configured for PUSCH transmission are configured to follow common beam(s) indicated for UL transmission.

According to some embodiments of the present application, an indicator field (e.g., referred to as a SRS resource set indicator or a beam indicator), which may include 2 bits or other bit number is introduced to indicate the common beam(s) and the associated SRS resource set(s) for a CG type 1 PUSCH or the like and may be provided in the corresponding configuration..

If only one SRS resource is configured per SRS resource set of two SRS resource sets configured for PUSCH transmission, *srs-ResourceIndicator* field will be absent in the corresponding configuration of a CG type 1 PUSCH transmission. In this case, a SRS resource set indicator or a beam indicator will be configured to indicate the beam(s) of the PUSCH and the associated SRS resource set(s). If more than one SRS resource is configured per SRS resource set, then one or two *srs-ResourceIndicator* fields can be configured for CG type 1 PUSCH transmission or the like. In this case, the number of *srs-ResourceIndicator* can indicate whether the PUSCH transmission is transmitted to a single TRP or multiple TRPs. The SRS resource set indicator or beam indicator is not always necessary for CG type 1 PUSCH transmission or the like. In the following, two scenarios will be separately illustrated. The first scenario is that *srs-ResourceIndicator* is absent for a CG type 1 PUSCH or the like, and a SRS resource set indicator or a beam indicator is always configured for the CG type 1 PUSCH transmission or the like. The second scenario is that at least one *srs-ResourceIndicator* field is present for a CG type 1 PUSCH or the like, and a SRS resource set indicator or a beam indicator can be optionally configured for the CG type 1 PUSCH or the like.

For example, Fig. 2 illustrates a method of PUSCH according to some embodiments of the present disclosure, which can be performed by a BS.

In operation 201, the BS may transmit configuration information indicating a CG type 1 PUSCH transmission, wherein the configuration information includes at least one of the following to indicate with which common beam(s) of at least one common beam which is applicable for uplink transmission in a slot the CG type 1 PUSCH transmission is associated: first indication information indicating association of the CG type 1 PUSCH transmission with at least a part of at least one common beam or association of the CG type 1 PUSCH transmission with at least a part of a plurality of SRS resource sets configured for CG type 1 PUSCH transmission; second indication information indicating a PUSCH scheme of the CG type 1 PUSCH transmission; or third indication information including at most two SRS resource indicator values. In operation 202, the BS may receive the CG type 1 PUSCH transmission in the slot based on the configuration information.

Hereinafter, taking CG type 1 PUSCH transmission as an example, more specific embodiments will be illustrated in view of different scenarios. The PUSCH transmission may be a single TRP PUSCH transmission or a multi-TRP PUSCH transmission.

### Scenario 1

In scenario 1, in the configuration of the PUSCH transmission, there is no SRS resource indication information (e.g. *srs-ResourceIndicator*)*,* or the SRS resource indication information does not include a SRS resource indicator value which means only one SRS resource is configured per SRS resource set configured for PUSCH transmission, and the present disclosure proposes several solutions for determining one or more common beams for the PUSCH transmission.

### Solution 1-1A

In this solution, at least one common beam and a plurality of SRS resource sets are configured for the PUSCH transmission, and the network may configure the first indication information indicating the association of the PUSCH transmission with at least a part of a plurality of SRS resource sets configured for PUSCH transmission. For example, the network may configure a SRS resource set indicator to indicates the associated SRS resource set(s) for the PUSCH transmission.

The indication information, i.e., the SRS resource set indicator, may include one bit. Thus, there are two states of the bit, i.e. "0" and "1", and the two states may indicate the following information as shown in table 1 below:

**Table 1**

| bit state | associated SRS resource set(s) |
|---|---|
| 0 | the first SRS resource set |
| 1 | at least two SRS resource sets |

The first state "0" in table 1 indicates: the PUSCH transmission is associated with the first SRS resource set of the plurality of SRS resource sets with usage set to "codebook" or "non-codebook". The UE may determine the beam of the PUSCH transmission based on the first SRS resource set. In particular, if the SRS resource sets configured for PUSCH transmission are not configured to follow common beam(s) indicated for UL transmission, the beams of the first SRS resource sets may be associated with a TCI state group, among the at least one common beam, there may be a common beam also associated with the same TCI state group, and this common beam is determined as the common beam of the PUSCH transmission. In other words, the beams of the first SRS resource set and a common beam used for the PUSCH transmission of the at least one common beam are associated with the same TCI state group.

In some other cases, if the SRS resource sets configured for PUSCH transmission are configured to follow common beam(s) indicated for UL transmission the beams of the first SRS resource set may be a first common beam of the at least one common beam, and this beam is determined as the common beam of the PUSCH transmission. That is, a beam of the first SRS resource set and a common beam used for the PUSCH transmission of the at least one common beam are the same.

The second state "1" in table 1 indicates: the PUSCH transmission is associated with at least two SRS resource sets of the plurality of SRS resource sets with usage set to "codebook" or "non-codebook". For each PUSCH transmission occasion (or each occasion of the PUSCH transmission), if the SRS resource sets configured for PUSCH transmission are not configured to follow common beam(s) indicated for UL transmission, the beams of a SRS resource set associated with the PUSCH transmission occasion and a common beam used for the PUSCH transmission occasion of the at least one common beam are associated with the same TCI state group. For example, for the first PUSCH transmission occasion, it may be associated with the first (or the second, the third, etc.) SRS resource set of the plurality of SRS resource sets with usage set to "codebook" or "non-codebook". The beams of the first SRS resource sets may be associated with a TCI state group, among the at least one common beam, there may be a common beam also associated with the same TCI state group, and this common beam is determined as the common beam of the first PUSCH transmission occasion.

In some other cases, if the SRS resource sets configured for PUSCH transmission are configured to follow common beam(s) indicated for UL transmission, the beam of the first and second SRS resource sets may be a first and second common beam of the at least one common beam respectively, and the first common beam is determined as the common beam of the first PUSCH transmission occasion. That is, a beam of the first SRS resource set and a common beam used for the first PUSCH transmission occasion of the at least one common beam are the same.

In an embodiment, two common beams and two SRS resource sets are configured for the PUSCH transmission, and the indication information, e.g., the SRS resource set indicator, may include one bit, and thus there are two states of the bit, e.g. "0" and "1", and the two states may indicate the following information as shown in table 2 below:

**Table 2**

| bit state | associated SRS resource set(s) |
|---|---|
| 0 | the first SRS resource set |
| 1 | two SRS resource sets |

The first state "0" in table 2 indicates: the PUSCH transmission is associated with the first SRS resource set of the two of SRS resource sets with usage set to "codebook" or "non-codebook". The UE may determine the beam of the PUSCH transmission based on the first SRS resource set. In particular, if the SRS resource sets configured for PUSCH transmission are not configured to follow common beam(s) indicated for UL transmission, the beams of the first SRS resource sets may be associated with a TCI state group, among the two common beams, there may be a common beam also associated with the same TCI state group, and this common beam is determined as the common beam of the PUSCH transmission. In other words, the beams of the first SRS resource set and a common beam used for the PUSCH transmission of the two common beams are associated with the same TCI state group.

In some other cases, if the SRS resource sets configured for PUSCH transmission are configured to follow common beam(s) indicated for UL transmission, a beam of the first SRS resource set may be a first common beam of the two common beams, and this beam is determined as the common beam of the PUSCH transmission. That is, a beam of the first SRS resource set and a common beam used for the PUSCH transmission of the two common beams are the same.

The second state "1" in table 2: the PUSCH transmission is associated with two SRS resource sets with usage set to "codebook" or "non-codebook". The PUSCH transmission is associated with two SRS resource sets of the plurality of SRS resource sets with usage set to "codebook" or "non-codebook". For each PUSCH transmission occasion (or each occasion of the PUSCH transmission), if the SRS resource sets configured for PUSCH transmission are not configured to follow common beam(s) indicated for UL transmission, the beams of a SRS resource set associated with the PUSCH transmission occasion and a common beam used for the PUSCH transmission occasion of the two common beams are associated with the same TCI state group. For example, for the first PUSCH transmission occasion, it may be associated with the first (or the second) SRS resource set of the plurality of SRS resource sets with usage set to "codebook" or "non-codebook". The beams of the first SRS resource sets may be associated with a TCI state group, among two common beams, there may be a common beam that is also associated with the same TCI state group, and this common beam is determined as the common beam of the first PUSCH transmission occasion.

In some other cases, if the SRS resource sets configured for PUSCH transmission are configured to follow common beam(s) indicated for UL transmission, the beams of the first and second SRS resource sets may be a first and second common beams of two common beams respectively, and the first common beam is determined as the common beam of the first PUSCH transmission occasion. That is, a beam of the first SRS resource set and a common beam used for the first PUSCH transmission occasion of two common beams are the same.

The UE may determine the beams for the PUSCH transmission in a similar fashion as explained for table 1, and the details are omitted here.

In some other embodiments, the indication information, e.g., the SRS resource set indicator, may include two bits. There are four states of the two bits, i.e. "00," "01," "10," and "11", and the four states may indicate the following information as shown in table 3 below:

**Table 3**

| bit state | associated SRS resource set(s) |
|---|---|
| 00 | the first SRS resource set |
| 01 | the second SRS resource set |
| 10 | at least two SRS resource sets |
| 11 | at least two SRS resource sets |

The first state "00" in table 3 indicates: the PUSCH transmission is associated with the first SRS resource set of the plurality of SRS resource sets with usage set to "codebook" or "non-codebook". The UE may determine the beam of the PUSCH transmission based on the first SRS resource set. In particular, if the SRS resource sets configured for PUSCH transmission are not configured to follow common beam(s) indicated for UL transmission, the beams of the first SRS resource sets may be associated with a TCI state group, among the at least one common beam, there may be a common beam also associated with the same TCI state group, and this common beam is determined as the common beam of the PUSCH transmission. In other words, the beams of the first SRS resource set and a common beam used for the PUSCH transmission of the at least one common beam are associated with the same TCI state group.

In some other cases, if the SRS resource sets configured for PUSCH transmission are configured to follow common beam(s) indicated for UL transmission, a beam of the first SRS resource set may be a first common beam of the at least one common beam, and this beam is determined as the common beam of the PUSCH transmission. That is, a beam of the first SRS resource set and a common beam used for the PUSCH transmission of the at least one common beam are the same.

The second state "01" in table 3 indicates: the PUSCH transmission is associated with the second SRS resource set of the plurality of SRS resource sets with usage set to "codebook" or "non-codebook". The UE may determine the beam of the PUSCH transmission based on the second SRS resource set. In particular, if the SRS resource sets configured for PUSCH transmission are not configured to follow common beam(s) indicated for UL transmission, the beams of the second SRS resource sets may be associated with a TCI state group, among the at least one common beam, there may be a common beam also associated with the same TCI state group, and this common beam is determined as the common beam of the PUSCH transmission. In other words, the beams of the second SRS resource set and a common beam used for the PUSCH transmission of the at least one common beam are associated with the same TCI state group.

In some other cases, if the SRS resource sets configured for PUSCH transmission are configured to follow common beam(s) indicated for UL transmission, a beam of the second SRS resource set may be a second common beam of the at least one common beam, and this beam is determined as the common beam of the PUSCH transmission. That is, a beam of the second SRS resource set and a common beam used for the PUSCH transmission of the at least one common beam are the same.

The third state "10" in table 3 indicates: the PUSCH transmission is associated with at least two SRS resource sets of the plurality of SRS resource sets with usage set to "codebook" or "non-codebook". Among the PUSCH transmission occasions, the first PUSCH transmission occasion is associated with the first SRS resource set of the plurality of SRS resource sets. For each PUSCH transmission occasion (or each occasion of the PUSCH transmission, including the first PUSCH transmission occasion), if the SRS resource sets configured for PUSCH transmission are not configured to follow common beam(s) indicated for UL transmission, the beams of a SRS resource set associated with the PUSCH transmission occasion and a common beam used for the PUSCH transmission occasion of the at least one common beam are associated with the same TCI state group. For example, the beams of the first SRS resource sets may be associated with a TCI state group, among the at least one common beam, there may be a common beam also associated with the same TCI state group, and this common beam is determined as the common beam of the first PUSCH transmission occasion.

In some other cases, if the SRS resource sets configured for PUSCH transmission are configured to follow common beam(s) indicated for UL transmission, the beams of the first and second SRS resource sets may be a first and second common beams of the at least one common beam respectively, and the first common beam is determined as the common beam of the first PUSCH transmission occasion. That is, a beam of the first SRS resource set and a common beam used for the first PUSCH transmission occasion of the at least one common beam are the same.

In some embodiments, the first PUSCH transmission occasion may be a PUSCH transmission associated with the earliest starting symbol, the lowest starting resource block (RB), a CDM group with the lowest index or the lowest DMRS port index of all the PUSCH transmission occasions.

The fourth state "11" in table 3 indicates: the PUSCH transmission is associated with at least two SRS resource sets of the plurality of SRS resource sets with usage set to "codebook" or "non-codebook". Among the PUSCH transmission occasions, the first PUSCH transmission occasion is associated with the second SRS resource set of the plurality of SRS resource sets. For each PUSCH transmission occasion (or each occasion of the PUSCH transmission, including the first PUSCH transmission occasion), if the SRS resource sets configured for PUSCH transmission are not configured to follow common beam(s) indicated for UL transmission, the beams of a SRS resource set associated with the PUSCH transmission occasion and a common beam used for the PUSCH transmission occasion of the at least one common beam are associated with the same TCI state group. For example, the beams of the second SRS resource sets may be associated with a TCI state group, among the at least one common beam, there may be a common beam also associated with the same TCI state group, and this common beam is determined as the common beam of the first PUSCH transmission occasion.

In some other cases, if the SRS resource sets configured for PUSCH transmission are configured to follow common beam(s) indicated for UL transmission, the beams of the first and second SRS resource sets may be a first and second common beam of the at least one common beam respectively, and the second beam is determined as the common beam of the first PUSCH transmission occasion. That is, a beam of the second SRS resource set and a common beam used for the first PUSCH transmission occasion of the at least one common beam are the same.

In an embodiment, two common beams and two SRS resource sets are configured for the PUSCH transmission, and the indication information, i.e., the SRS resource set indicator, may include two bits. There are four states of the two bits, i.e. "00," "01," "10," and "11", and the four states may indicate the following information as shown in table 4 below:

**Table 4**

| bit state | associated SRS resource set(s) |
|---|---|
| 00 | the first SRS resource set |
| 01 | the second SRS resource set |
| 10 | two SRS resource sets |
| 11 | two SRS resource sets |

The first state "00" in table 4 indicates: the PUSCH transmission is associated with the first SRS resource set of the two SRS resource sets with usage set to "codebook" or "non-codebook". The UE may determine the beam of the PUSCH transmission based on the first SRS resource set. In particular, if the SRS resource sets configured for PUSCH transmission are not configured to follow common beam(s) indicated for UL transmission, the beams of the first SRS resource sets may be associated with a TCI state group, among the two common beams, there may be a common beam also associated with the same TCI state group, and this common beam is determined as the common beam of the PUSCH transmission. In other words, the beams of the first SRS resource set and a common beam used for the PUSCH transmission of the two common beams are associated with the same TCI state group.

In some other cases, if the SRS resource sets configured for PUSCH transmission are configured to follow common beam(s) indicated for UL transmission, a beam of the first SRS resource set may be a first common beam of the two common beams, and this beam is determined as the common beam of the PUSCH transmission. That is, a beam of the first SRS resource set and a common beam used for the PUSCH transmission of the two common beams are the same.

The second state "01" in table 4 indicates: the PUSCH transmission is associated with the second SRS resource set of the two SRS resource sets with usage set to "codebook" or "non-codebook". The UE may determine the beam of the PUSCH transmission based on the second SRS resource set. In particular, if the SRS resource sets configured for PUSCH transmission are not configured to follow common beam(s) indicated for UL transmission, the beams of the second SRS resource sets may be associated with a TCI state group, among the two common beams, there may be a common beam also associated with the same TCI state group, and this common beam is determined as the common beam of the PUSCH transmission. In other words, the beams of the second SRS resource set and a common beam used for the PUSCH transmission of the two common beams are associated with the same TCI state group.

In some other cases, if the SRS resource sets configured for PUSCH transmission are configured to follow common beam(s) indicated for UL transmission, a beam of the second SRS resource set may be a second common beam of the two common beams, and this beam is determined as the common beam of the PUSCH transmission. That is, a beam of the second SRS resource set and a common beam used for the PUSCH transmission of the two common beams are the same.

The third state "10" in table 4 indicates: the PUSCH transmission is associated with the two SRS resource sets with usage set to "codebook" or "non-codebook". Among the PUSCH transmission occasions, the first PUSCH transmission occasion is associated with the first SRS resource set of the two SRS resource sets. For each PUSCH transmission occasion (or each occasion of the PUSCH transmission, including the first PUSCH transmission occasion), if the SRS resource sets configured for PUSCH transmission are not configured to follow common beam(s) indicated for UL transmission, the beams of a SRS resource set associated with the PUSCH transmission occasion and a common beam used for the PUSCH transmission occasion of the two common beams are associated with the same TCI state group. For example, the beams of the first SRS resource sets may be associated with a TCI state group, among the two common beams, there may be a common beam also associated with the same TCI state group, and this common beam is determined as the common beam of the first PUSCH transmission occasion.

In some other cases, if the SRS resource sets configured for PUSCH transmission are configured to follow common beam(s) indicated for UL transmission, the beams of the first and second SRS resource sets may be a first and second common beam of the two common beams respectively, and the first common beam is determined as the common beam of the first PUSCH transmission occasion. That is, a beam of the first SRS resource set and a common beam used for the first PUSCH transmission occasion of the two common beams are the same.

The fourth state "11" in table 4 indicates: the PUSCH transmission is associated with the two SRS resource sets with usage set to "codebook" or "non-codebook". Among the PUSCH transmission occasions, the first PUSCH transmission occasion is associated with the second SRS resource set of the two SRS resource sets. For each PUSCH transmission occasion (or each occasion of the PUSCH transmission, including the first PUSCH transmission occasion), if the SRS resource sets configured for PUSCH transmission are not configured to follow common beam(s) indicated for UL transmission, the beams of a SRS resource set associated with the PUSCH transmission occasion and a common beam used for the PUSCH transmission occasion of the two common beams are associated with the same TCI state group. For example, the beams of the second SRS resource sets may be associated with a TCI state group, among the two common beams, there may be a common beam also associated with the same TCI state group, and this common beam is determined as the common beam of the first PUSCH transmission occasion.

In some other cases, if the SRS resource sets configured for PUSCH transmission are configured to follow common beam(s) indicated for UL transmission, the beams of the first and second SRS resource sets may be a first and second common beam of the two common beams respectively, and the second common beam is determined as the common beam of the first PUSCH transmission occasion. That is, a beam of the second SRS resource set and a common beam used for the first PUSCH transmission occasion of the two common beams are the same.

### Solution 1-1B

In this solution, at least one common beam and a plurality of SRS resource sets are configured for the PUSCH transmission, and the network may configure indication information indicating the association of the PUSCH transmission with at least a part of at least one common beam configured for PUSCH transmission. For example, the network may configure a beam indicator to indicate the associated beam(s) for the PUSCH transmission. It should be noted that the network may configure either the SRS resource sets indicator or the beam indicator.

The indication information, i.e., the beam indicator, may include one bit. There are two states of the bit, i.e. "0" and "1", and the two states may indicate the following information as shown in table 5 below:

**Table 5**

| bit state | associated common beam(s) |
|---|---|
| 0 | the first common beam |
| 1 | at least two common beams |

The first state "0" in table 5 indicates: the PUSCH transmission is associated with the first common beam of the at least one common beam. The UE may determine the SRS resource set of the plurality of SRS resource sets based on the first common beam. In particular, if the SRS resource sets configured for PUSCH transmission are not configured to follow common beam(s) indicated for UL transmission, the first common beam may be associated with a TCI state group, and there may be a SRS resource set of the plurality of SRS resource sets, whose beams are associated with the same TCI state group, and the PUSCH transmission is associated with this SRS resource set. That is, the first common beam and beams of the SRS resource set associated with the PUSCH transmission of the plurality of SRS resource sets are associated with the same TCI state group.

In some other cases, if the SRS resource sets configured for PUSCH transmission are configured to follow common beam(s) indicated for UL transmission, the first common beam and a beam of a SRS resource set of the plurality of SRS resource sets may be the same beam, and the PUSCH transmission is associated with this SRS resource set.

The second state "1" in table 5 indicates: the PUSCH transmission is associated with at least two common beams. In this state, at least two common beams and a plurality of SRS resource sets are configured for the PUSCH transmission.

The UE may determine the SRS resource set of the plurality of SRS resource sets based on the at least two common beams.

For each PUSCH transmission occasion (or each occasion of the PUSCH transmission), if the SRS resource sets configured for PUSCH transmission are not configured to follow common beam(s) indicated for UL transmission, the common beam of the at least two common beams and beams of a SRS resource set associated with the PUSCH transmission of the plurality of SRS resource sets are associated with the same TCI state group. For example, for the first PUSCH transmission occasion, it may be associated with the first (or the second, the third, etc.) common beam of the at least two common beams, and the first common beam is associated with a TCI state group. Among the plurality of SRS resource sets, there may be a SRS resource set, whose beams are also associated with the same TCI state group. Thus this SRS resource set is associated with the PUSCH transmission occasion.

In some other cases, if the SRS resource sets configured for PUSCH transmission are configured to follow common beam(s) indicated for UL transmission, the first (or the second, the third, etc.) common beam and a beam of a SRS resource set of the plurality of SRS resource sets may be the same, and the PUSCH transmission is associated with this SRS resource set.

In an embodiment, two common beams and two SRS resource sets are configured for the PUSCH transmission, and the indication information, i.e., the beam indicator, may include one bit. There are two states of the bit, i.e. "0" and "1", and the two states may indicate the following information as shown in table 6 below:

**Table 6**

| bit state | associated common beam(s) |
|---|---|
| 0 | the first common beam |
| 1 | two common beams |

The first state "0" in table 6 indicates: the PUSCH transmission is associated with the first common beam of the two common beams. The UE may determine the SRS resource set of the two SRS resource sets based on the first common beam. In particular, if the SRS resource sets configured for PUSCH transmission are not configured to follow common beam(s) indicated for UL transmission, the first common beam may be associated with a TCI state group, and there may be a SRS resource set of the two SRS resource sets, whose beams are associated with the same TCI state group, and the PUSCH transmission is associated with this SRS resource set. That is, the first common beam and beams of a SRS resource set associated with the PUSCH transmission of the two SRS resource sets are associated with the same TCI state group.

In some other cases, if the SRS resource sets configured for PUSCH transmission are configured to follow common beam(s) indicated for UL transmission, the first common beam and a beam of a SRS resource set of the two SRS resource sets may be the same beam, and the PUSCH transmission is associated with this SRS resource set.

The second state "1" in table 6 indicates: the PUSCH transmission is associated with two common beams. The UE may determine the SRS resource set of the two SRS resource sets based on the two common beams.

For each PUSCH transmission occasion (or each occasion of the PUSCH transmission), if the SRS resource sets configured for PUSCH transmission are not configured to follow common beam(s) indicated for UL transmission, the common beam of the two common beams and beams of a SRS resource set associated with the PUSCH transmission of the two of SRS resource sets are associated with the same TCI state group. For example, for the first PUSCH transmission occasion, it may be associated with the first (or the second) common beam of the two common beams, and the first common beam is associated with a TCI state group. Among the two of SRS resource sets, there may be a SRS resource set, whose beams are also associated with the same TCI state group. Thus this SRS resource set is associated with the PUSCH transmission occasion.

In some other cases, if the SRS resource sets configured for PUSCH transmission are configured to follow common beam(s) indicated for UL transmission, the first (or the second) common beam and a beam of a SRS resource set of the two SRS resource sets may be the same, and the PUSCH transmission is associated with this SRS resource set.

In some other embodiments, the indication information, i.e., the beam indicator, may include two bits. There are four states of the two bits, i.e. "00," "01," "10," and "11", and the four states may indicate the following information as shown in table 7 below:

**Table 7**

| bit state | associated common beam(s) |
|---|---|
| 00 | the first common beam |
| 01 | the second common beam |
| 10 | at least two common beams |
| 11 | at least two common beams |

The first state "00" in table 7 indicates: the PUSCH transmission is associated with the first common beam of the at least one common beam. The UE may determine the SRS resource set of the plurality of SRS resource sets based on the first common beam in a similar fashion as the first state "0" in table 5, and the details are omitted here.

In the following states "01", "10" and "11" in table 7, at least two common beams are configured for the PUSCH transmission.

The second state "01" in table 7 indicates: the PUSCH transmission is associated with the second common beam of at least two common beams. The UE may determine the SRS resource set of the plurality of SRS resource sets based on the second common beam.

The third state "10" in table 7 indicates: the PUSCH transmission is associated with at least two common beams. Among the PUSCH transmission occasions, the first PUSCH transmission occasion is associated with the first common beam.

For each PUSCH transmission occasion (or each occasion of the PUSCH transmission, including the first PUSCH transmission occasion), if the SRS resource sets configured for PUSCH transmission are not configured to follow common beam(s) indicated for UL transmission, the common beam of the at least two common beams and beams of a SRS resource set associated with the PUSCH transmission of the plurality of SRS resource sets are associated with the same TCI state group. For example, for the first PUSCH transmission occasion, it may be associated with the first (or the second, the third, etc.) common beam of the at least two common beams, and the first common beam is associated with a TCI state group. Among the plurality of SRS resource sets, there may be a SRS resource set, whose beams are also associated with the same TCI state group. Thus, this SRS resource set is associated with the PUSCH transmission occasion.

In some other cases, if the SRS resource sets configured for PUSCH transmission are configured to follow common beam(s) indicated for UL transmission, the first (or the second, the third, etc.) common beam and a beam of a SRS resource set of the plurality of SRS resource sets may be the same beam, and the PUSCH transmission is associated with this SRS resource set.

The fourth state "11" in table 7 indicates: the PUSCH transmission is associated with at least two common beams. Among the PUSCH transmission occasions, the first PUSCH transmission occasion is associated with the second common beam.

For each PUSCH transmission occasion (or each occasion of the PUSCH transmission, including the first PUSCH transmission occasion), if the SRS resource sets configured for PUSCH transmission are not configured to follow common beam(s) indicated for UL transmission, the common beam of the at least two common beams and beams of a SRS resource set associated with the PUSCH transmission of the plurality of SRS resource sets are associated with the same TCI state group. For example, for the first PUSCH transmission occasion, it may be associated with the first (or the second, the third, etc.) common beam of the at least two common beams, and the first common beam is associated with a TCI state group. Among the plurality of SRS resource sets, there may be a SRS resource set, whose beams are also associated with the same TCI state group. Thus this SRS resource set is associated with the PUSCH transmission occasion.

In some other cases, if the SRS resource sets configured for PUSCH transmission are configured to follow common beam(s) indicated for UL transmission, the first (or the second, the third, etc.) common beam and a beam of a SRS resource set of the plurality of SRS resource sets may be the same beam, and the PUSCH transmission is associated with this SRS resource set.

In an embodiment, two common beams and two SRS resource sets are configured for the PUSCH transmission, and the indication information, i.e., the beam indicator, may include two bits. There are four states of the two bits, i.e. "00," "01," "10," and "11", and the four states may indicate the following information as shown in table 8 below:

**Table 8**

| bit state | associated common beam(s) |
|---|---|
| 00 | the first common beam |
| 01 | the second common beam |
| 10 | two common beams |
| 11 | two common beams |

The first state "00" in table 8 indicates: the PUSCH transmission is associated with the first common beam of the two common beams. The UE may determine the SRS resource set of the two SRS resource sets based on the first common beam in a similar fashion as the first state "0" in table 5, and the details are omitted here.

In the following states "01", "10" and "11" in table 8, at least two common beams are configured for the PUSCH transmission.

The second state "01" in table 8 indicates: the PUSCH transmission is associated with the second common beam of the at least two common beams. The UE may determine the SRS resource set of the two SRS resource sets based on the second common beam.

The third state "10" in table 8 indicates: the PUSCH transmission is associated with two common beams. Among the PUSCH transmission occasions, the first PUSCH transmission occasion is associated with the first common beam.

For each PUSCH transmission occasion (or each occasion of the PUSCH transmission, including the first PUSCH transmission occasion), if the SRS resource sets configured for PUSCH transmission are not configured to follow common beam(s) indicated for UL transmission, the common beam of the two common beams and beams of a SRS resource set associated with the PUSCH transmission of the two SRS resource sets are associated with the same TCI state group. For example, for the first PUSCH transmission occasion, it may be associated with the first (or the second) common beam of the two common beams, and the first common beam is associated with a TCI state group. Among the two SRS resource sets, there may be a SRS resource set, whose beams are also associated with the same TCI state group. Thus this SRS resource set is associated with the PUSCH transmission occasion.

In some other cases, if the SRS resource sets configured for PUSCH transmission are configured to follow common beam(s) indicated for UL transmission, the first (or the second) common beam and a beam of a SRS resource set of the two SRS resource sets may be the same beam, and the PUSCH transmission is associated with this SRS resource set.

The fourth state "11" in table 8 indicates: the PUSCH transmission is associated with two common beams. Among the PUSCH transmission occasions, the first PUSCH transmission occasion is associated with the second common beam.

For each PUSCH transmission occasion (or each occasion of the PUSCH transmission, including the first PUSCH transmission occasion), if the SRS resource sets configured for PUSCH transmission are not configured to follow common beam(s) indicated for UL transmission, the common beam of the two common beams and beams of a SRS resource set associated with the PUSCH transmission of the two SRS resource sets are associated with the same TCI state group. For example, for the first PUSCH transmission occasion, it may be associated with the first (or the second, the third, etc.) common beam of the two common beams, and the first common beam is associated with a TCI state group. Among the two SRS resource sets, there may be a SRS resource set, whose beams are also associated with the same TCI state group. Thus this SRS resource set is associated with the PUSCH transmission occasion.

In some other cases, if the SRS resource sets configured for PUSCH transmission are configured to follow common beam(s) indicated for UL transmission, the first (or the second) common beam and a beam of a SRS resource set of the two SRS resource sets may be the same beam, and the PUSCH transmission is associated with this SRS resource set.

### Scenario 2

In this scenario, in the configuration of the PUSCH transmission, there is no SRS resource indication information (e.g. *srs-ResourceIndicator*) , or the SRS resource indication information does not include any SRS resource indicator value, which means only one SRS resource is configured per SRS resource set configured for PUSCH transmission. The UE may receive the second indication information indicating a PUSCH scheme of the PUSCH transmission, and the PUSCH transmission is associated with at least two common beams and at least two SRS resource sets. In particular, the second indication information may indicate one of the following:
- the PUSCH transmission is configured with at least two repetitions;
- the PUSCH transmission is configured with a frequency division multiplexing (FDM) scheme A, a FDM scheme B, or a single frequency network (SFN) scheme;
- the PUSCH transmission is indicated with at least two demodulation reference signal (DMRS) ports from two different CDM groups.

In other words, the second indication information indicates that there are multiple PUSCH transmission occasions for the transmission. For each PUSCH transmission occasion, if the SRS resource sets configured for PUSCH transmission are not configured to follow common beam(s) indicated for UL transmission, the common beam of the at least two common beams and beams of a SRS resource set associated with the PUSCH transmission of the at least two SRS resource sets are associated with the same TCI state group. For example, for the first PUSCH transmission occasion, it may be associated with the first (or the second, or the third, etc.) common beam of the at least two common beams, and the first common beam is associated with a TCI state group. Among the at least two SRS resource sets, there may be a SRS resource set, whose beams are also associated with the same TCI state group. Thus this SRS resource set is associated with the PUSCH transmission occasion. Alternatively, if the SRS resource sets configured for PUSCH transmission are configured to follow common beam(s) indicated for UL transmission, the common beam of the at least two common beams and a beam of a SRS resource set associated with the PUSCH transmission of the at least two SRS resource sets are the same beam.

In an embodiment, the PUSCH transmission is associated with two common beams and two SRS resource sets. For each PUSCH transmission occasion, if the SRS resource sets configured for PUSCH transmission are not configured to follow common beam(s) indicated for UL transmission, the common beam of the two common beams and beams of a SRS resource set associated with the PUSCH transmission of the two SRS resource sets are associated with the same TCI state group. For example, for the first PUSCH transmission occasion, it may be associated with the first (or the second) common beam of the at least two common beams, and the first common beam is associated with a TCI state group. Among the two SRS resource sets, there may be a SRS resource set, whose beams are also associated with the same TCI state group. Thus this SRS resource set is associated with the PUSCH transmission occasion. Alternatively, if the SRS resource sets configured for PUSCH transmission are configured to follow common beam(s) indicated for UL transmission, the common beam of the two common beams and a beam of a SRS resource set associated with the PUSCH transmission of the two SRS resource sets are the same beam.

In the case that the UE does not receive the second indication information, the PUSCH transmission is transmitted with the first common beam of at least two common beams and is associated with one SRS resource set of at least two SRS resource sets, and the beams of the SRS resource set and the common beam are associated with a same TCI state group if the SRS resource sets configured for PUSCH transmission are not configured to follow common beam(s) indicated for UL transmission, or the beam of the SRS resource set is the first common beam if the SRS resource sets configured for PUSCH transmission are configured to follow common beam(s) indicated for UL transmission,.

### Scenario 3

In scenario 3, in the configuration of the PUSCH transmission, there is no SRS resource indication information (e.g. *srs-Resourcelndicator),* or the SRS resource indication information does not include any SRS resource indicator value, which means only one SRS resource is configured per SRS resource set for PUSCH transmission. The PUSCH transmission is configured to be associated with one common beam no matter how many common beams are indicated for UL transmission. In some cases, only one common beam is indicated for UL transmission, and the PUSCH transmission is associated with the one common beam. In some other cases, two or more common beams are indicated for UL transmission, and the PUSCH transmission is associated with the first common beam of the two or more common beams. The PUSCH transmission may be configured to be associated with a plurality of SRS resource sets, and among these SRS resource sets, there may be a SRS resource sets whose beams and the one common beam (or the first common beam) are associated with the same TCI group if the SRS resource sets configured for PUSCH transmission are not configured to follow common beam(s) indicated for UL transmission, or a beam of the SRS resource sets among the SRS resource sets and the one common beam (or the first common beam) are the same if the SRS resource sets configured for PUSCH transmission are configured to follow common beam(s) indicated for UL transmission,.

For all the above scenarios, in the case that only one common beam is indicated for UL transmission, the PUSCH transmission will fall back to single TRP PUSCH transmission regardless of the configuration information. The PUSCH transmission is associated with the common beam. The PUSCH transmission is associated with one SRS resource set of a plurality of SRS resource sets, and the beams of the one SRS resource set and the one common beam are associated with the same TCI group if the SRS resource sets configured for PUSCH transmission are not configured to follow common beam(s) indicated for UL transmission, or a beam of the SRS resource sets among the SRS resource sets and the one common beam are the same if the SRS resource sets configured for PUSCH transmission are configured to follow common beam(s) indicated for UL transmission.

### Scenario 4

In this scenario, the UE may receive the third indication information indicating one or more two SRS resource indicator values. For example, the third indication information may include one or two SRS resource indicators, e.g. *srs-Resourcelndicator.* The number of common beams that are associated with the PUSCH transmission may be indicated by the third indication information, for example, one *srs-ResourceIndicator* may indicate the PUSCH transmission can only be associated with one common beam. Two *srs-ResourceIndicator* may indicate the PUSCH transmission may be associated with one or two common beams.

### Case 1:

In this case, the UE does not receive the first indication information, i.e. the SRS resource set indicator or the beam indicator, and the UE receives the third indication information, which may include zero, one, or two *srs-ResourceIndicator.* In the case that the third indication information includes zero *srs-ResourceIndicator,* there may be no third indication information, and thus the case is omitted here.

### Case 1-1:

In the case that the third indication information indicates one SRS resource indicator value, that is, one *srs-ResourceIndicator* is configured, the PUSCH transmission can only be associated with one common beam. In the case that two common beams are indicated for UL transmission, the PUSCH transmission may be transmitted by the first common beam of the two common beams. In the case that only one common beam is indicated, the PUSCH transmission may be transmitted by the only one common beam. Regarding the SRS resource set, the beams of the SRS resource set associated with the PUSCH transmission and the one common beam (or the first common beam of the two common beams) are associated with the same TCI state group if the SRS resource sets configured for PUSCH transmission are not configured to follow common beam(s) indicated for UL transmission, or a beam of the SRS resource set associated with the PUSCH transmission and the one common beam (or the first common beam of the two common beams) are the same beam if the SRS resource sets configured for PUSCH transmission are configured to follow common beam(s) indicated for UL transmission. Furthermore, the indicator, i.e. *srs-Resourcelndicator,* is associated with the SRS resource set.

### Case 1-2:

In the case that the third indication information indicates two SRS resource indicator values, that is, two indicators, i.e. srs-ResourceIndicator are configured, the PUSCH transmission may be associated with two common beams according to the indicated common beam(s) for UL transmission. The first indicator, i.e. the first *srs-ResourceIndicator,* may be associated with the first SRS resource set, the second indicator, i.e. the second *srs-ResourceIndicator,* may be associated with the second SRS resource set.

In the case that two common beams are also indicated for UL transmission, the PUSCH transmission may be associated with the two common beams. For each PUSCH transmission occasion, the beams of a SRS resource set associated with the PUSCH transmission occasion and a common beam used for the PUSCH transmission occasion of the at least one common beam are associated with the same TCI state group if the SRS resource sets configured for PUSCH transmission are not configured to follow common beam(s) indicated for UL transmission. Alternatively, a beam of the SRS resource set and a common beam used for the PUSCH transmission occasion are the same if the SRS resource sets configured for PUSCH transmission are configured to follow common beam(s) indicated for UL transmission.

The first PUSCH transmission occasion may be associated with the first common beam, or the first PUSCH transmission occasion is associated with the first SRS resource set (which may be indicated by the first *srs-Resourcelndicator).* In some embodiments, the first PUSCH transmission occasion may be a PUSCH transmission associated with the earliest starting symbol, the lowest starting RB, a CDM group with the lowest index or the lowest DMRS port index of all PUSCH transmission occasion.

In the case that only one common beam is indicated for UL transmission, the PUSCH transmission may be associated with the only one common beam. The beams of a SRS resource set associated with the PUSCH transmission and the only one common beam are associated with the same TCI state group if the SRS resource sets configured for PUSCH transmission are not configured to follow common beam(s) indicated for UL transmission, or a beam of a SRS resource set associated with the PUSCH transmission and the only one common beam are the same if the SRS resource sets configured for PUSCH transmission are configured to follow common beam(s) indicated for UL transmission. The PUSCH transmission is associated with one indicator (i.e. *srs-Resourcelndicator)* that is associated with the SRS resource set.

### Case 2:

In this case, the UE not only receives the first indication information, i.e. the SRS resource set indicator or the beam indicator, and the UE also receives the third indication information, which may include zero, one, or two *srs-ResourceIndicator.* In the case that the third indication information includes zero *srs-ResourceIndicator,* there may be no third indication information, and thus the UE may determine the common beams for the PUSCH transmission based on the first indication information only.

### Case 2-1

In the case that the third indication information indicates one SRS resource indicator value, that is, one *srs-ResourceIndicator* is configured, the first indication information may only indicate the states associated with one SRS resource set. For example, only the state(s) of a SRS resource set indicator which indicates the PUSCH transmission being associated with one SRS resource set can be configured for the PUSCH transmission; and only the state(s) of a beam indicator which indicates the PUSCH transmission being associated with one beam can be configured for the PUSCH transmission.

In the case that only one common beam is indicated for UL transmission, the PUSCH transmission may be associated with the only one common beam. The beams of a SRS resource set associated with the PUSCH transmission and the only one common beam are associated with the same TCI state group if the SRS resource sets configured for PUSCH transmission are not configured to follow common beam(s) indicated for UL transmission, or a beam of a SRS resource set associated with the PUSCH transmission and the only one common beam are the same if the SRS resource sets configured for PUSCH transmission are configured to follow common beam(s) indicated for UL transmission. The PUSCH transmission is associated with the indicator (i.e. *srs-ResourceIndicator*)*.*

In the case that two common beams are indicated for UL transmission, the PUSCH transmission may be transmitted by one t common beam of the two common beams according to the first indication. Regarding the associated SRS resource set of the PUSCH transmission, the beams of the SRS resource set associated with the PUSCH transmission and the one common beam (or the first common beam of the two common beams) are associated with the same TCI state group if the SRS resource sets configured for PUSCH transmission are not configured to follow common beam(s) indicated for UL transmission, or a beam of the SRS resource set associated with the PUSCH transmission and the one common beam (or the first common beam of the two common beams) are the same beam if the SRS resource sets configured for PUSCH transmission are configured to follow common beam(s) indicated for UL transmission. Furthermore, the indicator, *i.e.srs-ResourceIndicator,* is associated with the associated SRS resource set of the PUSCH transmission.

### Case 2-2

In the case that the third indication information indicates two SRS resource indicator values, that is, two indicators, i.e. *srs-ResourceIndicator,* are configured, the first indication information may indicate the any states associated with one or two SRS resource sets. And the first indicator (the first *srs-ResourceIndicator*) and the second indicator (the second *srs-ResourceIndicator*) may be associated with the first and second SRS resource set respectively. For example, the state(s) of a SRS resource set indicator which indicates the PUSCH transmission being associated with one SRS resource set, or two SRS resource sets, can be configured for the PUSCH transmission; and the state(s) of a beam indicator which indicates the PUSCH transmission being associated with one beam, or two beams, can be configured for the PUSCH transmission.

In the case that only one common beam is indicated for UL transmission, the PUSCH transmission may be associated with the only one common beam. The beams of a SRS resource set associated with the PUSCH transmission and the only one common beam are associated with the same TCI state group if the SRS resource sets configured for PUSCH transmission are not configured to follow common beam(s) indicated for UL transmission, or a beam of a SRS resource set associated with the PUSCH transmission and the only one common beam are the same if the SRS resource sets configured for PUSCH transmission are configured to follow common beam(s) indicated for UL transmission. The PUSCH transmission is associated with one indicator (i.e. *srs-ResourceIndicator)* that is associated with the SRS resource set.

In the case that two common beams are indicated for UL transmission, and the PUSCH transmission is associated with one or two common beams and associated with one or two SRS resource sets respectively according to the first configuration information as described in the above solution 1.

If the PUSCH transmission is associated with only one SRS resource set according to the first configuration information, then the PUSCH transmission is only associated with one indicator, for example, the first *srs-ResourceIndicator,* associated with the SRS resource set, and the other indicator, for example, the second *srs-ResourceIndicator,* is unused.

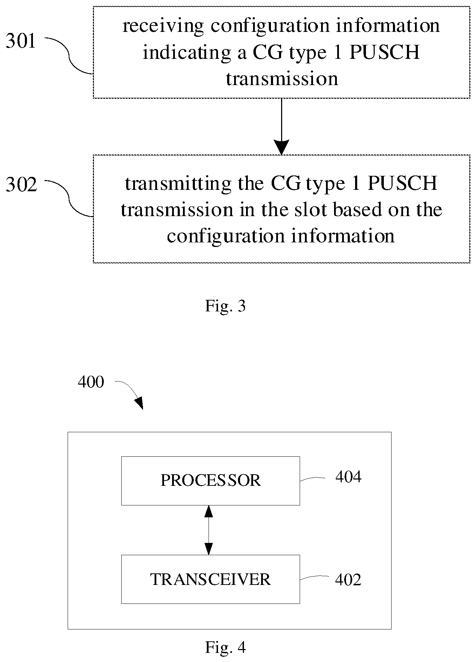

Fig. 3 illustrates a method performed by a UE of CG type 1 PUSCH transmission according to some embodiments of the present disclosure.

In operation 301, the UE may receive configuration information indicating a CG type 1 PUSCH transmission, wherein the configuration information includes at least one of the following to indicate with which common beam(s) of at least one common beam which is applicable for uplink transmission in a slot the CG type 1 PUSCH transmission is associated: first indication information indicating association of the CG type 1 PUSCH transmission with at least a part of at least one common beam or association of the CG type 1 PUSCH transmission with at least a part of a plurality of SRS resource sets configured for CG type 1 PUSCH transmission (for example, the SRS resource set indicator or the beam indicator as described in scenario 1); second indication information indicating a PUSCH scheme of the CG type 1 PUSCH transmission (for example, the second indication information as described in scenario 2); or third indication information including at most two SRS resource indicator values (for example, the third indication information as described in scenario 4). In operation 302, the UE may transmit the CG type 1 PUSCH transmission in the slot based on the configuration information.

In some embodiments, in the case that the configuration information includes at least the first indication information and the third indication information which includes no SRS resource indicator value, and at least two common beams are applicable for uplink transmission in the slot, the CG type 1 PUSCH transmission is associated with one or more common beams of the at least two common beams and one or more SRS resource sets of the plurality SRS resource sets according to the first indication information. For example, the UE may receive the SRS resource set indicator, or the beam indicator, and no third information.

In some embodiments, in the case that the configuration information includes at least the first indication information and the third indication information which includes one SRS resource indicator value, and at least two common beams are applicable for uplink transmission in the slot, the CG type 1 PUSCH transmission is associated with one common beam of the at least two common beams and one SRS resource set of the plurality SRS resource sets according to the first indication information and the third indication information. For example, the UE may receive the SRS resource set indicator, or the beam indicator, and one SRS resource indicator, e.g. *srs-ResourceIndicator* as described in Case 2-1 of scenario 4.

In some embodiments, in the case that the configuration information includes at least the first indication information and the third indication information which includes two SRS resource indicator values, and two common beams are applicable for uplink transmission in the slot, the CG type 1 PUSCH transmission is associated with one or more common beams of the two common beams and one or more SRS resource sets of the plurality of SRS resource sets according to the first indication information. For example, the UE may receive the SRS resource set indicator, or the beam indicator, and two SRS resource indicators, e.g. *srs-Resourcelndicator* as described in Case 2-2 of scenario 4.

In some embodiments, the first indication information indicates the association of the CG type 1 PUSCH transmission with the at least a part of the plurality of SRS resource sets by indicating one of the following: the CG type 1 PUSCH transmission is associated with a first SRS resource set of the plurality of SRS resource sets, wherein beams of the first SRS resource set and a common beam used for the CG type 1 PUSCH transmission of the at least one common beam are associated with a same TCI state group or a beam of the first SRS resource set is same as a common beam used for the CG type 1 PUSCH transmission of the at least one common beam (for example, bit state "0" in table 1 or bit state "00" in table 3); the CG type 1 PUSCH transmission is associated with a second SRS resource set of the plurality of SRS resource sets, wherein beams of the second SRS resource set and a common beam used for the CG type 1 PUSCH transmission of the at least one common beam are associated with a same TCI state group, or a beam of the second SRS resource set is same as a common beam used for the CG type 1 PUSCH transmission of the at least one common beam (for example, bit state "01" in table 3); the CG type 1 PUSCH transmission is associated with at least two SRS resource sets of the plurality of SRS resource sets, wherein a first occasion of the CG type 1 PUSCH transmission is associated with a first SRS resource set, and for each occasion of the CG type 1 PUSCH transmission, beams of a SRS resource set associated with the occasion and a common beam used for the occasion of the at least one common beam are associated with a same TCI state group, or a beam of a SRS resource set associated with the occasion is same as a common beam used for the occasion of the at least one common beam (for example, bit state "10" in table 3); or the CG type 1 PUSCH transmission is associated with at least two SRS resource sets of the plurality of SRS resource sets, wherein a first occasion of the CG type 1 PUSCH transmission is associated with a second SRS resource set, and for each occasion of the CG type 1 PUSCH transmission, beams of a SRS resource set associated with the occasion and a common beam used for the occasion of the at least one common beam are associated with a same TCI state group or a beam of a SRS resource set associated with the occasion is same as a common beam used for the occasion of the at least one common beam (for example, bit state "11" in table 3).

In some embodiments, the first indication information indicates the association of the CG type 1 PUSCH transmission with the at least a part of at least one common beam by indicating one of the following: the CG type 1 PUSCH transmission is associated with a first common beam of the at least one common beam, wherein the first common beam and beams of a SRS resource set associated with the CG type 1 PUSCH transmission of the plurality of SRS resource sets are associated with a same TCI state group or a beam of a SRS resource set associated with the CG type 1 PUSCH transmission of the plurality of SRS resource sets is same as the first common beam (for example, bit state "0" in table 5 or bit state "00" in table 7); the CG type 1 PUSCH transmission is associated with a second common beam of the at least one common beam, wherein the second common beam and beams of a SRS resource set associated with the CG type 1 PUSCH transmission of the plurality of SRS resource sets are associated with a same TCI state group or a beam of a SRS resource set associated with the CG type 1 PUSCH transmission of the plurality of SRS resource sets is same as the second common beam (for example, bit state "01" in table 7); the CG type 1 PUSCH transmission is associated with at least two common beams, wherein a first occasion of the CG type 1 PUSCH transmission is associated with a first common beam of the at least two common beams, and for each occasion of the CG type 1 PUSCH transmission, beams of a SRS resource set associated with the occasion and a common beam used for the occasion of the at least two common beams are associated with a same TCI state group, or a beam of a SRS resource set associated with the occasion of the plurality of SRS resource sets is same as a common beam used for the occasion of the at least two common beams (for example, bit state "10" in table 7); or the CG type 1 PUSCH transmission is associated with at least two common beams, wherein a first occasion of the CG type 1 PUSCH transmission is associated with a second common beam of the at least two common beams, and for each occasion of the CG type 1 PUSCH transmission, beams of a SRS resource set associated with the occasion and a common beam used for the occasion of the at least two common beams are associated with a same TCI state group, or a beam of a SRS resource set associated with the occasion of the plurality of SRS resource sets is same as a common beam used for the occasion of the at least two common beams (for example, bit state "11" in table 7).

In some embodiments, in the case that only one common beam is applicable for uplink transmission in the slot, the CG type 1 PUSCH transmission is associated with the one common beam, and is associated with one SRS resource set of the plurality of SRS resource sets, wherein beams of the SRS resource set and the one common beam are associated with a same TCI state group, or a beam of the SRS resource set of the plurality of SRS resource sets is same as the one common beam. That is, when only one common beam is indicated for UL transmission, the PUSCH transmission will fall back to single TRP PUSCH transmission regardless of the configuration information.

In some embodiments, the configuration information only includes the second indication information and the third indication information which does not indicates any SRS resource indicator value, and in the case that there are at least two common beams applicable for uplink transmission in the slot and the second indication information indicates one of the following: the CG type 1 PUSCH transmission is configured with at least two repetitions; the CG type 1 PUSCH transmission is configured with a frequency division multiplexing (FDM) scheme A, a FDM scheme B, or a single frequency network (SFN) scheme; or the CG type 1 PUSCH transmission is indicated with at least two demodulation reference signal (DMRS) ports from two different code-division multiplexing (CDM) groups, the CG type 1 PUSCH transmission is associated with the at least two common beams and at least two SRS resource sets

In some embodiments, in the case that there are at least two common beams applicable for uplink transmission in the slot while the second indication information indicates other PUSCH scheme, the CG type 1 PUSCH transmission is associated with a first beam of the at least two common beams, wherein the first beam and beams of a SRS resource set associated with the CG type 1 PUSCH transmission of the plurality of SRS resource sets are associated with a same TCI state group, or a beam of a SRS resource set associated with the CG type 1 PUSCH transmission of the plurality of SRS resource sets is same as the first beam. For example, scenario 2 describes these embodiments.

In some embodiments, the configuration information includes the third indication information which includes two SRS resource indicator values and no first indication information, and two common beams are applicable for uplink transmission in the slot, the CG type 1 PUSCH transmission is associated with the two common beams and associated with two SRS resource sets of the plurality of SRS resource sets, wherein for each occasion of the CG type 1 PUSCH transmission, beams of a SRS resource set associated with the occasion and a common beam used for the occasion of the two common beams are associated with the same TCI state group or a beam of a SRS resource set associated with the occasion is same as a common beam used for the occasion of the two common beams. For example, case 1 in scenario 4 describes these embodiments.

In some embodiments, the configuration information includes the third indication information which includes one SRS resource indicator value and no first indication information, and one or more common beams are applicable for uplink transmission in the slot, the CG type 1 PUSCH transmission is associated with the first common beam of the one or more common beams, and is associated with one SRS resource set of the plurality of SRS resource sets, wherein beams of the SRS resource set and the first common beam are associated with a same TCI state group or a beam of the SRS resource set of the plurality of SRS resource sets is same as the first common beam.

In some embodiments, the configuration information includes the third indication information which includes no SRS resource indicator value, and at least two common beams are applicable for uplink transmission in the slot, the CG type 1 PUSCH transmission is associated with a first common beam of the at least two common beams and one SRS resource sets of the plurality SRS resource sets, wherein beams of the SRS resource set and the first common beam are associated with a same TCI state group, or a beam of the SRS resource set of the plurality of SRS resource sets is same as the first common beam. For example, in scenario 3, the UE does not receive the first indication information, the second indication information, or the third indication information, or the UE receives the third indication information which includes no SRS resource indicator value, the UE may be associated with a first common beam of the at least two common beams and one SRS resource sets of the plurality SRS resource sets, the beams of the SRS resource set and the first common beam are associated with the same TCI state group, or a beam of the SRS resource set of the plurality of SRS resource sets is same as the first common beam.

Fig. 4 illustrates a simplified block diagram of an exemplary apparatus of CG type 1 PUSCH transmission according to some embodiments of the present disclosure.

As shown in Fig. 4, an example of the apparatus 400 may include at least one processor 404 and at least one transceiver 402 coupled to the processor 404. The apparatus 400 may be a UE, a BS, a RAN node, a MN, an SN, or any other device with similar functions.

Although in this figure, elements such as the at least one transceiver 402 and processor 404 are described in the singular, the plural is contemplated unless a limitation to the singular is explicitly stated. In some embodiments of the present disclosure, the transceiver 402 may be divided into two devices, such as a receiving circuitry and a transmitting circuitry. In some embodiments of the present disclosure, the apparatus 400 may further include an input device, a memory, and/or other components.

In some embodiments of the present disclosure, the apparatus 400 may be a UE. The transceiver 402 and the processor 404 may interact with each other so as to perform the operations of the UE described in any of Figs. 1-3. In some embodiments of the present disclosure, the apparatus 400 may be a node. The transceiver 402 and the processor 404 may interact with each other so as to perform the operations of the node described in any of Figs. 1-3.

In some embodiments of the present disclosure, the apparatus 400 may further include at least one non-transitory computer-readable medium.

For example, in some embodiments of the present disclosure, the non-transitory computer-readable medium may have stored thereon computer-executable instructions to cause the processor 404 to implement the method with respect to the UE as described above. For example, the computer-executable instructions, when executed, cause the processor 404 interacting with transceiver 402 to perform the operations of the UE described in any of Figs. 1-3.

In some embodiments of the present disclosure, the non-transitory computer-readable medium may have stored thereon computer-executable instructions to cause the processor 404 to implement the method with respect to the node as described above. For example, the computer-executable instructions, when executed, cause the processor 404 interacting with transceiver 402 to perform the operations of the node described in any of Figs. 1-3.

The method of the present disclosure can be implemented on a programmed processor. However, controllers, flowcharts, and modules may also be implemented on a general purpose or special purpose computer, a programmed microprocessor or microcontroller and peripheral integrated circuit elements, an integrated circuit, a hardware electronic or logic circuit such as a discrete element circuit, a programmable logic device, or the like. In general, any device that has a finite state machine capable of implementing the flowcharts shown in the figures may be used to implement the processing functions of the present disclosure.

In this disclosure, relational terms such as "first," "second," and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a," "an," or the like does not, without more constraints, preclude the existence of additional identical elements in the process, method, article, or apparatus that comprises the element. Also, the term "another" is defined as at least a second or more. The terms "including," "having," and the like, as used herein, are defined as "comprising."

## Claims

1. A user equipment, UE, (105, 400), comprising:
a transceiver (402); and
a processor (400) coupled with the transceiver and configured to:
receive configuration information indicating a configured grant, CG, type 1 physical uplink shared channel, PUSCH, transmission, wherein the configuration information includes the following to indicate with which common beam(s) of at least one common beam which is applicable for uplink transmission in a slot the CG type 1 PUSCH transmission is associated:
first indication information indicating association of the CG type 1 PUSCH transmission with at least a part of at least one common beam or association of the CG type 1 PUSCH transmission with at least a part of a plurality of sounding reference signal, SRS, resource sets configured for CG type 1 PUSCH transmission;
and
transmit the CG type 1 PUSCH transmission in the slot based on the configuration information.

2. The UE of Claim 1, wherein in the case that the configuration information includes at least the first indication information and a second indication information which includes no SRS resource indicator value, and at least two common beams are applicable for uplink transmission in the slot, the CG type 1 PUSCH transmission is associated with one or more common beams of the at least two common beams and one or more SRS resource sets of the plurality SRS resource sets according to the first indication information.

3. The UE of Claim 1, wherein in the case that the configuration information includes at least the first indication information and a second indication information which includes one SRS resource indicator value, and at least two common beams are applicable for uplink transmission in the slot; the CG type 1 PUSCH transmission is associated with one common beam of the at least two common beams and one SRS resource set of the plurality SRS resource sets according to the first indication information and the second indication information.

4. The UE of Claim 1, wherein in the case that the configuration information includes at least the first indication information and a second indication information which includes two SRS resource indicator values, and two common beams are applicable for uplink transmission in the slot, the CG type 1 PUSCH transmission is associated with one or more common beams of the two common beams and one or more SRS resource sets of the plurality of SRS resource sets according to the first indication information.

5. The UE of any one of Claims 1-4, wherein the first indication information indicates the association of the CG type 1 PUSCH transmission with the at least a part of the plurality of SRS resource sets by indicating one of the following:
the CG type 1 PUSCH transmission is associated with a first SRS resource set of the plurality of SRS resource sets;
the CG type 1 PUSCH transmission is associated with a second SRS resource set of the plurality of SRS resource sets;
the CG type 1 PUSCH transmission is associated with at least two SRS resource sets of the plurality of SRS resource sets, wherein a first occasion of the CG type 1 PUSCH transmission is associated with a first SRS resource set.

6. The UE of any one of Claims 1-4, wherein the first indication information indicates the association of the CG type 1 PUSCH transmission with the at least a part of at least one common beam by indicating one of the following:
the CG type 1 PUSCH transmission is associated with a first common beam of the at least one common beam;
the CG type 1 PUSCH transmission is associated with a second common beam of the at least one common beam;
the CG type 1 PUSCH transmission is associated with at least two common beams, wherein a first occasion of the CG type 1 PUSCH transmission is associated with a first common beam of the at least two common beams.

7. The UE of Claim 1, wherein in the case that only one common beam is applicable for uplink transmission in the slot, the CG type 1 PUSCH transmission is associated with the one common beam, and is associated with one SRS resource set of the plurality of SRS resource sets, wherein beams of the SRS resource set and the one common beam are associated with a same TCI state group, or a beam of the SRS resource set of the plurality of SRS resource sets is same as the one common beam.

8. The UE of Claim 1, wherein the configuration information includes a second indication information which includes two SRS resource indicator values and no first indication information, and two common beams are applicable for uplink transmission in the slot, the CG type 1 PUSCH transmission is associated with the two common beams and associated with two SRS resource sets of the plurality of SRS resource sets, wherein for each occasion of the CG type 1 PUSCH transmission, beams of a SRS resource set associated with the occasion and a common beam used for the occasion of the two common beams are associated with the same TCI state group or a beam of a SRS resource set associated with the occasion is same as a common beam used for the occasion of the two common beams.

9. The UE of Claim 1, wherein the configuration information includes a second indication information which includes one SRS resource indicator value and no first indication information, and one or more common beams are applicable for uplink transmission in the slot, the CG type 1 PUSCH transmission is associated with a first common beam of the one or more common beams, and is associated with one SRS resource set of the plurality of SRS resource sets, wherein beams of the SRS resource set and the first common beam are associated with a same TCI state group or a beam of the SRS resource set of the plurality of SRS resource sets is same as the first common beam.

10. The UE of Claim 1, wherein the configuration information includes a second indication information which includes no SRS resource indicator value and no first indication information, and at least two common beams are applicable for uplink transmission in the slot, the CG type 1 PUSCH transmission is associated with a first common beam of the at least two common beams and one SRS resource sets of the plurality SRS resource sets, wherein beams of the SRS resource set and the first common beam are associated with a same TCI state group, or a beam of the SRS resource set of the plurality of SRS resource sets is same as the first common beam.

11. A base station, BS, (101, 400), comprising:
a transceiver (402); and
a processor (404) coupled with the transceiver and configured to:
transmit configuration information indicating a configured grant, CG, type 1 physical uplink shared channel, PUSCH, transmission, wherein the configuration information includes the following to indicate with which common beam(s) of at least one common beam which is applicable for uplink transmission in a slot the CG type 1 PUSCH transmission is associated:
first indication information indicating association of the CG type 1 PUSCH transmission with at least a part of at least one common beam or association of the CG type 1 PUSCH transmission with at least a part of a plurality of sounding reference signal, SRS, resource sets configured for CG type 1 PUSCH transmission;
and
receive the CG type 1 PUSCH transmission in the slot based on the configuration information.

12. The BS of Claim 11, wherein in the case that the configuration information includes at least the first indication information and a second indication information which includes no SRS resource indicator value, and at least two common beams are applicable for uplink transmission in the slot, the CG type 1 PUSCH transmission is associated with one or more common beams of the at least two common beams and one or more SRS resource sets of the plurality SRS resource sets according to the first indication information.

13. A method performed by a user equipment, UE, (103, 400), comprising:
receiving (301) configuration information indicating a configured grant, CG, type 1 physical uplink shared channel, PUSCH, transmission, wherein the configuration information includes the following to indicate with which common beam(s) of at least one common beam which is applicable for uplink transmission in a slot the CG type 1 PUSCH transmission is associated:
first indication information indicating association of the CG type 1 PUSCH transmission with at least a part of at least one common beam or association of the CG type 1 PUSCH transmission with at least a part of a plurality of sounding reference signal, SRS, resource sets configured for CG type 1 PUSCH transmission;
and
transmitting (302) the CG type 1 PUSCH transmission in the slot based on the configuration information.

14. A method performed by a base station, BS, (101, 400), comprising:
transmitting (201) configuration information indicating a configured grant, CG, type 1 physical uplink shared channel, PUSCH, transmission, wherein the configuration information includes the following to indicate with which common beam(s) of at least one common beam which is applicable for uplink transmission in a slot the CG type 1 PUSCH transmission is associated:
first indication information indicating association of the CG type 1 PUSCH transmission with at least a part of at least one common beam or association of the CG type 1 PUSCH transmission with at least a part of a plurality of sounding reference signal, SRS, resource sets configured for CG type 1 PUSCH transmission; and
receiving (202) the CG type 1 PUSCH transmission in the slot based on the configuration information.

15. A processor (404) coupleable with at least one transceiver (402) and configured to perform operations comprising:
receiving configuration information indicating a configured grant, CG, type 1 physical uplink shared channel, PUSCH, transmission, wherein the configuration information includes the following to indicate with which common beam(s) of at least one common beam which is applicable for uplink transmission in a slot the CG type 1 PUSCH transmission is associated:
first indication information indicating association of the CG type 1 PUSCH transmission with at least a part of at least one common beam or association of the CG type 1 PUSCH transmission with at least a part of a plurality of sounding reference signal, SRS, resource sets configured for CG type 1 PUSCH transmission; and
transmitting the CG type 1 PUSCH transmission in the slot based on the configuration information.

## Patentansprüche

1. Benutzergerät, UE, (105, 400), umfassend:
einen Transceiver (402); und
einen Prozessor (400), welcher mit dem Transceiver gekoppelt und dazu konfiguriert ist:
Konfigurationsinformationen zu empfangen, welche eine konfigurierte Grant-, CG-, Typ-1-Übertragung über einen gemeinsam genutzten physikalischen Uplink-Kanal, PUSCH, anzeigen, wobei die Konfigurationsinformationen Folgendes beinhalten, um anzugeben, mit welchem/welchen gemeinsamen Strahl(en) von zumindest einem gemeinsamen Strahl, welcher für Uplink-Übertragung in einem Zeitschlitz anwendbar ist, die CG-Typ-1-PUSCH-Übertragung verknüpft ist:
erste Anzeigeinformationen, welche eine Verknüpfung der CG-Typ-1-PUSCH-Übertragung mit zumindest einem Teil zumindest eines gemeinsamen Strahls oder eine Verknüpfung der CG-Typ-1-PUSCH-Übertragung mit zumindest einem Teil einer Vielzahl von Sounding Reference Signal (SRS)-Ressourcensätzen angeben, welche für die CG-Typ-1-PUSCH-Übertragung konfiguriert sind;
und
die CG-Typ-1-PUSCH-Übertragung in dem Zeitschlitz basierend auf den Konfigurationsinformationen zu übertragen.

2. UE nach Anspruch 1, wobei im Fall, dass die Konfigurationsinformationen zumindest die ersten Anzeigeinformationen und zweite Anzeigeinformationen beinhalten, welche keinen SRS-Ressourcenindikatorwert beinhalten, und zumindest zwei gemeinsame Strahlen für Uplink-Übertragung in dem Zeitschlitz anwendbar sind, die CG-Typ-1-PUSCH-Übertragung mit einem oder mehreren gemeinsamen Strahlen der zumindest zwei gemeinsamen Strahlen und einem oder mehreren SRS-Ressourcensätzen der Vielzahl SRS-Ressourcensätze gemäß den ersten Anzeigeinformationen verknüpft ist.

3. UE nach Anspruch 1, wobei im Fall, dass die Konfigurationsinformationen zumindest die ersten Anzeigeinformationen und zweite Anzeigeinformationen beinhalten, welche einen SRS-Ressourcenindikatorwert beinhalten, und zumindest zwei gemeinsame Strahlen für Uplink-Übertragung in dem Zeitschlitz anwendbar sind; die CG-Typ-1-PUSCH-Übertragung mit einem gemeinsamen Strahl der zumindest zwei gemeinsamen Strahlen und einem SRS-Ressourcensatz der Vielzahl SRS-Ressourcensätze gemäß den ersten Anzeigeinformationen und den zweiten Anzeigeinformationen verknüpft ist.

4. UE nach Anspruch 1, wobei im Fall, dass die Konfigurationsinformationen zumindest die ersten Anzeigeinformationen und zweite Anzeigeinformationen beinhalten, welche zwei SRS-Ressourcenindikatorwerte beinhalten, und zwei gemeinsame Strahlen für Uplink-Übertragung in dem Zeitschlitz anwendbar sind, die CG-Typ-1-PUSCH-Übertragung mit einem oder mehreren gemeinsamen Strahlen der zwei gemeinsamen Strahlen und einem oder mehreren SRS-Ressourcensätzen der Vielzahl von SRS-Ressourcensätzen gemäß den ersten Anzeigeinformationen verknüpft ist.

5. UE nach einem der Ansprüche 1-4, wobei die ersten Anzeigeinformationen die Verknüpfung der CG-Typ-1-PUSCH-Übertragung mit zumindest einem Teil der Vielzahl von SRS-Ressourcensätzen durch Angabe eines der Folgenden angibt:
die CG-Typ-1-PUSCH-Übertragung ist mit einem ersten SRS-Ressourcensatz aus der Vielzahl von SRS-Ressourcensätzen verknüpft;
die CG-Typ-1-PUSCH-Übertragung ist mit einem zweiten SRS-Ressourcensatz aus der Vielzahl von SRS-Ressourcensätzen verknüpft;
die CG-Typ-1-PUSCH-Übertragung ist mit zumindest zwei SRS-Ressourcensätzen aus der Vielzahl von SRS-Ressourcensätzen verknüpft, wobei ein erstes Ereignis der CG-Typ-1-PUSCH-Übertragung mit einem ersten SRS-Ressourcensatz verknüpft ist.

6. UE nach einem der Ansprüche 1-4, wobei die ersten Anzeigeinformationen die Verknüpfung der CG-Typ-1-PUSCH-Übertragung mit zumindest einem Teil von zumindest einem gemeinsamen Strahl durch Angabe eines der Folgenden angibt:
die CG-Typ-1-PUSCH-Übertragung ist mit einem ersten gemeinsamen Strahl des zumindest einen gemeinsamen Strahls verknüpft;
die CG-Typ-1-PUSCH-Übertragung ist mit einem zweiten gemeinsamen Strahl des zumindest einen gemeinsamen Strahls verknüpft;
die CG-Typ-1-PUSCH-Übertragung ist mit zumindest zwei gemeinsamen Strahlen verknüpft, wobei ein erstes Ereignis der CG-Typ-1-PUSCH-Übertragung mit einem ersten gemeinsamen Strahl der zumindest zwei gemeinsamen Strahlen verknüpft ist.

7. UE nach Anspruch 1, wobei in dem Fall, dass in dem Zeitschlitz nur ein gemeinsamer Strahl für die Uplink-Übertragung anwendbar ist, die CG-Typ-1-PUSCH-Übertragung mit dem einen gemeinsamen Strahl verknüpft ist, und mit einem SRS-Ressourcensatz aus der Vielzahl von SRS-Ressourcensätzen verknüpft ist, wobei Strahlen des SRS-Ressourcensatzes und der eine gemeinsame Strahl mit derselben TCI-Zustandsgruppe verknüpft sind, oder ein Strahl des SRS-Ressourcensatzes aus der Vielzahl von SRS-Ressourcensätzen derselbe wie der eine gemeinsame Strahl ist.

8. UE nach Anspruch 1, wobei die Konfigurationsinformationen zweite Anzeigeinformationen beinhalten, welche zwei SRS-Ressourcenindikatorwerte und keine ersten Anzeigeinformationen beinhalten, und zwei gemeinsame Strahlen für Uplink-Übertragung in dem Zeitschlitz anwendbar sind, die CG-Typ-1-PUSCH-Übertragung mit den zwei gemeinsamen Strahlen verknüpft und mit zwei SRS-Ressourcensätzen aus der Vielzahl von SRS-Ressourcensätzen verknüpft ist, wobei bei jedem Ereignis der CG-Typ-1-PUSCH-Übertragung Strahlen eines mit dem Ereignis verknüpften SRS-Ressourcensatzes und ein gemeinsamer Strahl, welcher aus den beiden gemeinsamen Strahlen für das Ereignis verwendet wird, mit derselben TCI-Zustandsgruppe verknüpft sind oder ein Strahl eines SRS-Ressourcensatzes, welcher mit dem Ereignis verknüpft ist, derselbe ist, wie ein gemeinsamer Strahl, welcher für das Ereignis der beiden gemeinsamen Strahlen verwendet wird.

9. UE nach Anspruch 1, wobei die Konfigurationsinformationen zweite Anzeigeinformationen beinhalten, welche einen SRS-Ressourcenindikatorwert und keine ersten Anzeigeinformationen beinhalten, und ein oder mehrere gemeinsame Strahlen für Uplink-Übertragung in dem Zeitschlitz anwendbar sind, die CG-Typ-1-PUSCH-Übertragung mit einem ersten gemeinsamen Strahl des einen oder der mehreren gemeinsamen Strahlen verknüpft ist; und mit einem SRS-Ressourcensatz aus der Vielzahl von SRS-Ressourcensätzen verknüpft ist, wobei Strahlen des SRS-Ressourcensatzes und der erste gemeinsame Strahl mit derselben TCI-Zustandsgruppe verknüpft sind, oder ein Strahl des SRS-Ressourcensatzes aus der Vielzahl von SRS-Ressourcensätzen derselbe wie der erste gemeinsame Strahl ist.

10. UE nach Anspruch 1, wobei die Konfigurationsinformationen zweite Anzeigeinformationen beinhalten, welche keinen SRS-Ressourcenindikatorwert und keine ersten Anzeigeinformationen beinhalten, und zumindest zwei gemeinsame Strahlen für Uplink-Übertragung in dem Zeitschlitz anwendbar sind, die CG-Typ-1-PUSCH-Übertragung mit einem ersten gemeinsamen Strahl der zumindest zwei gemeinsamen Strahlen und einem SRS-Ressourcensatz aus der Vielzahl von SRS-Ressourcensätzen verknüpft ist, wobei Strahlen des SRS-Ressourcensatzes und der erste gemeinsame Strahl mit derselben TCI-Zustandsgruppe verknüpft sind, oder ein Strahl des SRS-Ressourcensatzes aus der Vielzahl von SRS-Ressourcensätzen derselbe wie der erste gemeinsame Strahl ist.

11. Basisstation, BS, (101, 400), umfassend:
einen Transceiver (402); und
einen Prozessor (404), welcher mit dem Transceiver gekoppelt und dazu konfiguriert ist:
Konfigurationsinformationen zu übertragen, welche eine konfigurierte Grant-, CG-, Typ-1-Übertragung über einen gemeinsam genutzten physikalischen Uplink-Kanal, PUSCH, anzeigen, wobei die Konfigurationsinformationen Folgendes beinhalten, um anzugeben, mit welchem/welchen gemeinsamen Strahl(en) von zumindest einem gemeinsamen Strahl, welcher für Uplink-Übertragung in einem Zeitschlitz anwendbar ist, die CG-Typ-1-PUSCH-Übertragung verknüpft ist:
erste Anzeigeinformationen, welche eine Verknüpfung der CG-Typ-1-PUSCH-Übertragung mit zumindest einem Teil zumindest eines gemeinsamen Strahls oder eine Verknüpfung der CG-Typ-1-PUSCH-Übertragung mit zumindest einem Teil einer Vielzahl von Sounding Reference Signal (SRS)-Ressourcensätzen angeben, welche für die CG-Typ-1-PUSCH-Übertragung konfiguriert sind;
und
die CG-Typ-1-PUSCH-Übertragung in dem Zeitschlitz basierend auf den Konfigurationsinformationen zu empfangen.

12. BS nach Anspruch 11, wobei im Fall, dass die Konfigurationsinformationen zumindest die ersten Anzeigeinformationen und zweite Anzeigeinformation beinhalten, welche keinen SRS-Ressourcenindikatorwert beinhaltet, und zumindest zwei gemeinsame Strahlen für Uplink-Übertragung in dem Zeitschlitz anwendbar sind, die CG-Typ-1-PUSCH-Übertragung mit einem oder mehreren gemeinsamen Strahlen der zumindest zwei gemeinsamen Strahlen und einem oder mehreren SRS-Ressourcensätzen der Vielzahl SRS-Ressourcensätze gemäß den ersten Anzeigeinformationen verknüpft ist.

13. Verfahren, welches von einem Benutzergerät, UE, (103, 400), durchgeführt wird, umfassend:
Empfangen (301) von Konfigurationsinformationen, welche eine konfigurierte Grant-, CG-, Typ-1-Übertragung über einen gemeinsam genutzten physikalischen Uplink-Kanal, PUSCH, anzeigen, wobei die Konfigurationsinformationen Folgendes beinhalten, um anzugeben, mit welchem/welchen gemeinsamen Strahl(en) von zumindest einem gemeinsamen Strahl, welcher für Uplink-Übertragung in einem Zeitschlitz anwendbar ist, die CG-Typ-1-PUSCH-Übertragung verknüpft ist:
erste Anzeigeinformationen, welche eine Verknüpfung der CG-Typ-1-PUSCH-Übertragung mit zumindest einem Teil zumindest eines gemeinsamen Strahls oder eine Verknüpfung der CG-Typ-1-PUSCH-Übertragung mit zumindest einem Teil einer Vielzahl von Sounding Reference Signal (SRS)-Ressourcensätzen angeben, welche für die CG-Typ-1-PUSCH-Übertragung konfiguriert sind;
und
Übertragen (302) der CG-Typ-1-PUSCH-Übertragung in dem Zeitschlitz basierend auf den Konfigurationsinformationen.

14. Verfahren, welches von einer Basisstation, BS, (101, 400) durchgeführt wird, umfassend:
Übertragen (201) von Konfigurationsinformationen, welche eine konfigurierte Grant-, CG-, Typ-1-Übertragung über einen gemeinsam genutzten physikalischen Uplink-Kanal, PUSCH, anzeigen, wobei die Konfigurationsinformationen Folgendes beinhalten, um anzugeben, mit welchem/welchen gemeinsamen Strahl(en) von zumindest einem gemeinsamen Strahl, welcher für Uplink-Übertragung in einem Zeitschlitz anwendbar ist, die CG-Typ-1-PUSCH-Übertragung verknüpft ist:
erste Anzeigeinformationen, welche eine Verknüpfung der CG-Typ-1-PUSCH-Übertragung mit zumindest einem Teil zumindest eines gemeinsamen Strahls oder eine Verknüpfung der CG-Typ-1-PUSCH-Übertragung mit zumindest einem Teil einer Vielzahl von Sounding Reference Signal (SRS)-Ressourcensätzen angeben, welche für die CG-Typ-1-PUSCH-Übertragung konfiguriert sind; und
Empfangen (202) der CG-Typ-1-PUSCH-Übertragung in dem Zeitschlitz basierend auf den Konfigurationsinformationen.

15. Prozessor (404), welcher mit zumindest einem Transceiver (402) gekoppelt werden kann und dazu konfiguriert ist, Operationen auszuführen, welche umfassen:
Empfangen von Konfigurationsinformationen, welche eine konfigurierte Grant-, CG-, Typ-1-Übertragung über einen gemeinsam genutzten physikalischen Uplink-Kanal, PUSCH, anzeigen, wobei die Konfigurationsinformationen Folgendes beinhalten, um anzugeben, mit welchem/welchen gemeinsamen Strahl(en) von zumindest einem gemeinsamen Strahl, welcher für Uplink-Übertragung in einem Zeitschlitz anwendbar ist, die CG-Typ-1-PUSCH-Übertragung verknüpft ist:
erste Anzeigeinformationen, welche eine Verknüpfung der CG-Typ-1-PUSCH-Übertragung mit zumindest einem Teil zumindest eines gemeinsamen Strahls oder eine Verknüpfung der CG-Typ-1-PUSCH-Übertragung mit zumindest einem Teil einer Vielzahl von Sounding Reference Signal (SRS)-Ressourcensätzen angeben, welche für die CG-Typ-1-PUSCH-Übertragung konfiguriert sind; und
Übertragen der CG-Typ-1-PUSCH-Übertragung in dem Zeitschlitz basierend auf den Konfigurationsinformationen.

## Revendications

1. Équipement utilisateur, UE, (105, 400) comprenant :
un émetteur-récepteur (402) ; et
un processeur (400) couplé à l'émetteur-récepteur et configuré pour :
recevoir des informations de configuration indiquant une transmission sur canal physique partagé de liaison montante, PUSCH, avec autorisation configurée, CG, de type 1, dans lequel les informations de configuration incluent les éléments suivants pour indiquer à quel(s) faisceau(x) commun(s) d'au moins un faisceau commun applicable à la transmission en liaison montante dans un créneau la transmission PUSCH avec CG de type 1 est associée :
des premières informations d'indication indiquant l'association de la transmission PUSCH avec CG de type 1 à au moins une partie d'au moins un faisceau commun ou l'association de la transmission PUSCH avec CG de type 1 à au moins une partie d'une pluralité d'ensembles de ressources de signaux de référence de sondage, SRS, configurés pour la transmission PUSCH avec CG de type 1 ;
et
émettre la transmission PUSCH avec CG de type 1 dans le créneau sur la base des informations de configuration.

2. UE selon la revendication 1, dans lequel, dans le cas où les informations de configuration incluent au moins les premières informations d'indication et des deuxièmes informations d'indication qui n'incluent aucune valeur d'indicateur de ressources SRS, et qu'au moins deux faisceaux communs sont applicables à la transmission en liaison montante dans le créneau, la transmission PUSCH avec CG de type 1 est associée à un ou plusieurs faisceaux communs parmi les au moins deux faisceaux communs et à un ou plusieurs ensembles de ressources SRS parmi la pluralité d'ensembles de ressources SRS conformément aux premières informations d'indication.

3. UE selon la revendication 1, dans lequel, dans le cas où les informations de configuration incluent au moins les premières informations d'indication et des deuxièmes informations d'indication qui incluent une valeur d'indicateur de ressources SRS, et qu'au moins deux faisceaux communs sont applicables à la transmission en liaison montante dans le créneau, la transmission PUSCH avec CG de type 1 est associée à un faisceau commun parmi les au moins deux faisceaux communs et à un ensemble de ressources SRS parmi la pluralité d'ensembles de ressources SRS, conformément aux premières informations d'indication et aux deuxièmes informations d'indication.

4. UE selon la revendication 1, dans lequel, dans le cas où les informations de configuration incluent au moins les premières informations d'indication et des deuxièmes informations d'indication qui incluent deux valeurs d'indicateur de ressources SRS, et que deux faisceaux communs sont applicables à la transmission en liaison montante dans le créneau, la transmission PUSCH avec CG de type 1 est associée à un ou plusieurs faisceaux communs des deux faisceaux communs et à un ou plusieurs ensembles de ressources SRS de la pluralité d'ensembles de ressources SRS conformément aux premières informations d'indication.

5. UE selon l'une quelconque des revendications 1-4, dans lequel les premières informations d'indication indiquent l'association de la transmission PUSCH avec CG de type 1 à au moins une partie de la pluralité d'ensembles de ressources SRS en indiquant l'un des éléments suivants :
la transmission PUSCH avec CG de type 1 est associée à un premier ensemble de ressources SRS parmi la pluralité d'ensembles de ressources SRS ;
la transmission PUSCH avec CG de type 1 est associée à un deuxième ensemble de ressources SRS parmi la pluralité d'ensembles de ressources SRS ;
la transmission PUSCH avec CG de type 1 est associée à au moins deux ensembles de ressources SRS parmi la pluralité d'ensembles de ressources SRS, dans lequel une première occasion de la transmission PUSCH avec CG de type 1 est associée à un premier ensemble de ressources SRS.

6. UE selon l'une quelconque des revendications 1-4, dans lequel les premières informations d'indication indiquent l'association de la transmission PUSCH avec CG de type 1 à la au moins une partie d'au moins un faisceau commun en indiquant l'un des éléments suivants :
la transmission PUSCH avec CG de type 1 est associée à un premier faisceau commun du au moins un faisceau commun ;
la transmission PUSCH avec CG de type 1 est associée à un deuxième faisceau commun du au moins un faisceau commun ;
la transmission PUSCH avec CG de type 1 est associée à au moins deux faisceaux communs, dans lequel une première occasion de la transmission PUSCH avec CG de type 1 est associée à un premier faisceau commun des au moins deux faisceaux communs.

7. UE selon la revendication 1, dans lequel, dans le cas où un seul faisceau commun est applicable à la transmission en liaison montante dans le créneau, la transmission PUSCH avec CG de type 1 est associée audit un seul faisceau commun et à un ensemble de ressources SRS parmi la pluralité d'ensembles de ressources SRS, dans lequel des faisceaux de l'ensemble de ressources SRS et le faisceau commun sont associés à un même groupe d'états de TCI, ou bien un faisceau de l'ensemble de ressources SRS parmi la pluralité d'ensembles de ressources SRS est identique au faisceau commun.

8. UE selon la revendication 1, dans lequel les informations de configuration incluent des deuxièmes informations d'indication qui incluent deux valeurs d'indicateur de ressources SRS et aucune première information d'indication, et deux faisceaux communs sont applicables à la transmission en liaison montante dans le créneau, la transmission PUSCH avec CG de type 1 est associée aux deux faisceaux communs et associée à deux ensembles de ressources SRS parmi la pluralité d'ensembles de ressources SRS, dans lequel, pour chaque occasion de la transmission PUSCH avec CG de type 1, des faisceaux d'un ensemble de ressources SRS associés à l'occasion et un faisceau commun utilisé pour l'occasion des deux faisceaux communs sont associés au même groupe d'états de TCI ou bien un faisceau d'un ensemble de ressources SRS associé à l'occasion est le même qu'un faisceau commun utilisé pour l'occasion des deux faisceaux communs.

9. UE selon la revendication 1, dans lequel les informations de configuration incluent des deuxièmes informations d'indication qui incluent une valeur d'indicateur de ressources SRS et aucune première information d'indication, et un ou plusieurs faisceaux communs sont applicables à la transmission en liaison montante dans le créneau, la transmission PUSCH avec CG de type 1 est associée à un premier faisceau commun parmi les un ou plusieurs faisceaux communs, et est associée à un ensemble de ressources SRS parmi la pluralité d'ensembles de ressources SRS, dans lequel des faisceaux de l'ensemble de ressources SRS et le premier faisceau commun sont associés à un même groupe d'états de TCI ou bien un faisceau de l'ensemble de ressources SRS parmi la pluralité d'ensembles de ressources SRS est le même que le premier faisceau commun.

10. UE selon la revendication 1, dans lequel les informations de configuration incluent des deuxièmes informations d'indication qui n'incluent aucune valeur d'indicateur de ressource SRS et aucune première information d'indication, et dans lequel au moins deux faisceaux communs sont applicables à la transmission en liaison montante dans le créneau, la transmission PUSCH avec CG de type 1 est associée à un premier faisceau commun parmi les au moins deux faisceaux communs et à un ensemble de ressources SRS parmi la pluralité d'ensembles de ressources SRS, dans lequel des faisceaux de l'ensemble de ressources SRS et le premier faisceau commun sont associés à un même groupe d'états de TCI, ou bien un faisceau de l'ensemble de ressources SRS parmi la pluralité d'ensembles de ressources SRS est identique au premier faisceau commun.

11. Station de base, BS, (101, 400), comprenant :
un émetteur-récepteur (402) ; et
un processeur (404) couplé à l'émetteur-récepteur et configuré pour :
émettre des informations de configuration indiquant une transmission sur canal physique partagé de liaison montante, PUSCH, avec autorisation configurée, CG, de type 1, dans laquelle les informations de configuration incluent les éléments suivants pour indiquer à quel(s) faisceau(x) commun(s) d'au moins un faisceau commun applicable à la transmission en liaison montante dans un créneau la transmission PUSCH avec CG de type 1 est associée :
des premières informations d'indication indiquant l'association de la transmission PUSCH avec CG de type 1 à au moins une partie d'au moins un faisceau commun ou l'association de la transmission PUSCH avec CG de type 1 à au moins une partie d'une pluralité d'ensembles de ressources de signaux de référence de sondage, SRS, configurés pour la transmission PUSCH avec CG de type 1 ;
et
recevoir la transmission PUSCH avec CG de type 1 dans le créneau sur la base des informations de configuration.

12. BS selon la revendication 11, dans laquelle, dans le cas où les informations de configuration incluent au moins les premières informations d'indication et des deuxièmes informations d'indication qui n'incluent aucune valeur d'indicateur de ressources SRS, et qu'au moins deux faisceaux communs sont applicables à la transmission en liaison montante dans le créneau, la transmission PUSCH avec CG de type 1 est associée à un ou plusieurs faisceaux communs parmi les au moins deux faisceaux communs et à un ou plusieurs ensembles de ressources SRS parmi la pluralité d'ensembles de ressources SRS conformément aux premières informations d'indication.

13. Procédé mis en œuvre par un équipement utilisateur, UE, (103, 400), comprenant :
la réception (301) des informations de configuration indiquant une transmission sur canal physique partagé de liaison montante, PUSCH, avec autorisation configurée, CG, de type 1, dans lequel les informations de configuration incluent les éléments suivants pour indiquer à quel(s) faisceau(x) commun(s) d'au moins un faisceau commun applicable à la transmission en liaison montante dans un créneau la transmission PUSCH avec CG de type 1 est associée :
des premières informations d'indication indiquant l'association de la transmission PUSCH avec CG de type 1 à au moins une partie d'au moins un faisceau commun ou l'association de la transmission PUSCH avec CG de type 1 à au moins une partie d'une pluralité d'ensembles de ressources de signaux de référence de sondage, SRS, configurés pour la transmission PUSCH avec CG de type 1 ;
et
l'émission (302) de la transmission PUSCH avec CG de type 1 dans le créneau sur la base des informations de configuration.

14. Procédé mis en œuvre par une station de base, BS, (101, 400), comprenant :
l'émission (201) des informations de configuration indiquant une transmission sur canal physique partagé de liaison montante, PUSCH, avec autorisation configurée, CG, de type 1, dans lequel les informations de configuration incluent les éléments suivants pour indiquer à quel(s) faisceau(x) commun(s) d'au moins un faisceau commun applicable à la transmission en liaison montante dans un créneau la transmission PUSCH avec CG de type 1 est associée :
des premières informations d'indication indiquant l'association de la transmission PUSCH avec CG de type 1 à au moins une partie d'au moins un faisceau commun ou l'association de la transmission PUSCH avec CG de type 1 à au moins une partie d'une pluralité d'ensembles de ressources de signaux de référence de sondage, SRS, configurés pour la transmission PUSCH avec CG de type 1 ; et
la réception (202) de la transmission PUSCH avec CG de type 1 dans le créneau sur la base des informations de configuration.

15. Processeur (404) pouvant être couplé à au moins un émetteur-récepteur (402) et configuré pour effectuer des opérations comprenant :
la réception des informations de configuration indiquant une transmission sur canal physique partagé de liaison montante, PUSCH, avec autorisation configurée, CG, de type 1, dans lequel les informations de configuration incluent les éléments suivants pour indiquer à quel(s) faisceau(x) commun(s) d'au moins un faisceau commun applicable à la transmission en liaison montante dans un créneau la transmission PUSCH avec CG de type 1 est associée :
des premières informations d'indication indiquant l'association de la transmission PUSCH avec CG de type 1 à au moins une partie d'au moins un faisceau commun ou l'association de la transmission PUSCH avec CG de type 1 à au moins une partie d'une pluralité d'ensembles de ressources de signaux de référence de sondage, SRS, configurés pour la transmission PUSCH avec CG de type 1 ; et
l'émission de la transmission PUSCH avec CG de type 1 dans le créneau sur la base des informations de configuration.
